(19) Europäisches Patentamt
European Patent Office
Office européen des brevets

(11) **EP 4 772 953 A1**

(12) **EUROPEAN PATENT APPLICATION**
published in accordance with Art. 153(4) EPC

(43) Date of publication:
**08.07.2026  Bulletin 2026/28**

(21) Application number: **25829852.0**

(22) Date of filing: **16.06.2025**

(51) International Patent Classification (IPC):
**G05D 1/43** (2024.01)

(52) Cooperative Patent Classification (CPC):
**G05D 1/43**

(86) International application number:
**PCT/CN2025/101201**

(87) International publication number:
**WO 2025/261298 (26.12.2025 Gazette 2025/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.06.2024  CN 202410801985
20.06.2024  CN 202410802103

(71) Applicant: **Shenzhen Mammotion Innovation Co.,
Limited
Shenzhen, Guangdong 518000 (CN)**

(72) Inventors:
• **WEI, Jidong**
  **Shenzhen, Guangdong 518000 (CN)**
• **WANG, Kai**
  **Shenzhen, Guangdong 518000 (CN)**
• **LUO, Yuantai**
  **Shenzhen, Guangdong 518000 (CN)**

(74) Representative: **Huang, Liwei
Cäcilienstraße 12
40597 Düsseldorf (DE)**

(54) **CONTROL METHODS FOR MOBILE DEVICE AND RELATED DEVICE**

(57)     Embodiments of this disclosure disclose a method for controlling a mobile device and a related device. The method includes: controlling the mobile device to move along a preset path; in response to the mobile device moving to a position where a satellite positioning signal does not satisfy a preset condition, controlling the mobile device to continue to move along the preset path, and during continuing to move along the preset path, determining a distance between a position of the mobile device and a nearest first position; and in response to the distance being equal to a remaining sustainment mileage, if detecting that the satellite positioning signal does not satisfy the preset condition, then controlling the mobile device to change a moving mode, such that a satellite positioning signal is detected to satisfy the preset condition at a position after moving of the mobile device; wherein the remaining sustainment mileage is obtained based on a preset sustainment mileage and a mileage of the mobile device continuing to move along the preset path.

Controlling the mobile device to move along a preset path    101

Controlling the mobile device to continue to move along the preset path, and determining, during the continued movement along the preset path a distance between a position of the mobile device and a nearest first position, in response to the mobile device moving to a position where a satellite positioning signal does not satisfy a preset condition    102

Controlling the mobile device to change a movement mode such that the mobile device detects a satellite positioning signal satisfying the preset condition at a position after movement, in response to the distance being equal to a remaining sustainment mileage and detecting that the satellite positioning signal does not satisfy the preset condition; wherein the remaining sustainment mileage is obtained based on a preset sustainment mileage and a mileage of the mobile device continuing to move along the preset path    103

FIG. 1A

EP 4 772 953 A1

## Description

The present application claims priority to Chinese Patent Applications No. 202410802103.3, filed with the China National Intellectual Property Administration on June 20, 2024, and entitled " CONTROL METHOD FOR MOBILE DEVICE AND RELATED DEVICE", and Chinese Patent Application No. 202410801985.1, filed with the China National Intellectual Property Administration on June 20, 2024, and entitled "METHOD FOR CONTROLLING MOBILE DEVICE AND RELATED DEVICE", the entire contents of which are incorporated herein by reference.

## TECHNICAL FIELD

This disclosure relates to the field of robot technologies, and in particular, to a method for controlling a mobile device and a related device.

## BACKGROUND

In the prior art, during operation of a lawn mowing robot, satellite signals are poor due to blockages by houses, trees, and the like on a lawn, which affects satellite positioning accuracy. Therefore, how to solve the problem of inaccurate satellite positioning due to blockages affecting movement of the lawn mowing robot urgently needs to be solved.

## SUMMARY

Embodiments of this disclosure provide a method for controlling a mobile device and a related device, which can solve the problem of inaccurate satellite positioning due to blockages affecting movement of the lawn mowing robot.

In a first aspect, an embodiment of this disclosure provides a method for controlling a mobile device, comprising:

controlling the mobile device to move along a preset path;
controlling the mobile device to continue to move along the preset path and determining a distance between a position of the mobile device and a nearest first position during the continued movement along the preset path, both in response to the mobile device moving to a position where a satellite positioning signal does not satisfy a preset condition; and
controlling the mobile device to change a movement mode such that the mobile device detects a satellite positioning signal satisfying the preset condition at a position after movement, in response to the distance being equal to a remaining sustainment mileage and detecting that the satellite positioning signal does not satisfy the preset condition;
wherein the remaining sustainment mileage is obtained based on a preset sustainment mileage and a mileage of the mobile device continuing to move along the preset path.

In a second aspect, an embodiment of this disclosure provides an apparatus for controlling a mobile device, comprising a first control unit, a determination unit and a second control unit, wherein:

the first control unit is configured to control the mobile device to move along a preset path;
the determination unit is configured to: control the mobile device to continue to move along the preset path, and determine a distance between a position of the mobile device and a nearest first position during the continued movement along the preset path, in response to the mobile device moving to a position where a satellite positioning signal does not satisfy a preset condition; and
the second control unit is configured to: control the mobile device to move toward the nearest first position such that the satellite positioning signal is detected to satisfy the preset condition at a position after movement, in response to the distance being equal to a remaining sustainment mileage and the satellite positioning signal not satisfying the preset condition;
wherein the remaining sustainment mileage is obtained based on a preset sustainment mileage and a mileage of the mobile device continuing to move along the preset path.

In a third aspect, an embodiment of the present application provides a method for controlling a mobile device, comprising:

controlling the mobile device to move along a preset path;
controlling the mobile device to continue to move along the preset path, and determining a distance between a position of the mobile device and a nearest first position during the continued movement along the preset path, in response to the mobile device moving to a position where a satellite positioning signal does not satisfy a preset condition;
controlling the mobile device to stop moving, capturing a first environment image in at least one direction through a camera, identifying a sky region in the first environment image, and determining a second position corresponding to the sky region, when the distance is equal to a remaining sustainment mileage and the satellite positioning signal does not satisfy the preset condition, wherein the remaining sustainment mileage is obtained based on a preset sustainment mileage and a mileage of the mobile device continuing to move along the preset path; and
controlling the mobile device to move toward the second position such that the satellite positioning signal is detected to satisfy the preset condition at a position after movement, if a distance between the mobile device and the second position is less than or equal to the remaining sustainment mileage.

In a fourth aspect, an embodiment of the present application provides a control apparatus for a mobile device, the control apparatus comprising: a first control unit, a determination unit, and a second control unit, wherein:

the first control unit is configured to: control the mobile device to move along a preset path; and control the mobile device to continue to move along the preset path and determine a distance between a position of the mobile device and a nearest first position during the continued movement along the preset path, in response to the mobile device moving to a position where a satellite positioning signal does not satisfy a preset condition;

the determination unit is configured to: control the mobile device to stop moving, capture a first environment image in at least one direction through a camera, identify a sky region in the first environment image, and determine a second position corresponding to the sky region, when the distance is equal to a remaining sustainment mileage and the satellite positioning signal does not satisfy the preset condition, wherein the remaining sustainment mileage is obtained based on a preset sustainment mileage and a mileage of the mobile device continuing to move along the preset path; and

the second control unit is configured to: control the mobile device to move toward the second position such that the satellite positioning signal is detected to satisfy the preset condition at a position after movement, if a distance between the mobile device and the second position is less than or equal to the remaining sustainment mileage.

In a fifth aspect, an embodiment of this disclosure provides a mobile device, including a processor, a memory, a communication interface, and one or more programs, where the one or more programs are stored in the memory and configured to be executed by the processor, and the programs include instructions for performing steps in the first aspect or the third aspect of the embodiments of this disclosure.

In a sixth aspect, an embodiment of this disclosure provides a computer-readable storage medium, where the computer-readable storage medium stores a computer program for electronic data exchange, and the computer program causes a computer to perform part or all of steps described in the first aspect or the third aspect of the embodiments of this disclosure.

In a seventh aspect, an embodiment of this disclosure provides a computer program product, where the computer program product includes a non-transitory computer-readable storage medium storing a computer program, and the computer program is operable to cause a computer to perform part or all of steps described in the first aspect or the third aspect of the embodiments of this disclosure. The computer program product can be a software installation package.

Implementing the embodiments of this disclosure has the following beneficial effects: According to the method for controlling a mobile device and the related device described in this disclosure, the mobile device is controlled to move along a preset path. When the mobile device moves to a position where a satellite positioning signal does not satisfy a preset condition, the mobile device is controlled to continue to move along the preset path, during which a distance between the position of the mobile device and a nearest first position is determined. In response to the distance being equal to a remaining sustainment mileage, if the satellite positioning signal is detected to not satisfy the preset condition, the mobile device is controlled to move toward the nearest first position, such that the satellite positioning signal is detected to satisfy the preset condition at a position after movement. The remaining sustainment mileage is obtained based on a preset sustainment mileage and a mileage covered by the mobile device while continuing to move along the preset path.

Furthermore, accurate positioning can be maintained within a certain distance even when the satellite positioning signal is insufficient. When the distance from the mobile device to the nearest first position equals the remaining sustainment mileage, it indicates that a failure to move toward said first position may result in the distance to any subsequent nearest first position also exceeding the remaining sustainment mileage, thereby rendering the mobile device unable to accurately reach the first position. Therefore, by initiating movement toward the nearest first position specifically when the distance equals the remaining sustainment mileage and the signal remains insufficient, the frequency of returning to first positions is reduced, optimizing operational efficiency. This ensures that the mobile device can accurately reach the first position, which serves to guide the mobile device to an open area (where the satellite positioning signal satisfies the preset condition) to resume satellite-based positioning, effectively solving the problem of movement interference for lawn mowing robots caused by inaccurate satellite positioning due to signal blockages.

**BRIEF DESCRIPTION OF THE DRAWINGS**

In order to more clearly describe technical solutions in embodiments of this disclosure or in the prior art, accompanying drawings required in the description of the embodiments or the prior art will be briefly introduced below. Apparently, the accompanying drawings in the following description are only some embodiments of this disclosure. For those of ordinary skill in the art, other drawings can be obtained based on these drawings without creative work.

FIG. 1A is a schematic flowchart of a method for controlling a mobile device according to an embodiment of this disclosure;
FIG. 1B is a schematic diagram showing a sky region in an environment image according to an embodiment of this disclosure;
FIG. 1C is a schematic diagram showing a maximum inscribed circle according to an embodiment of this disclosure;
FIG. 1D is a schematic diagram showing a first position according to an embodiment of this disclosure;
FIG. 1E is another schematic diagram showing a first position according to an embodiment of this disclosure;
FIG. 1F is a schematic diagram showing an operation scenario of a method for controlling a mobile device according to an embodiment of this disclosure;
FIG. 2 is a schematic flowchart of another method for controlling a mobile device according to an embodiment of this disclosure;
FIG. 3A is a schematic flowchart of still another method for controlling a mobile device according to an embodiment of this disclosure;
FIG. 3B is a schematic diagram showing a sky region in an environment image according to an embodiment of this disclosure;
FIG. 3C is a schematic diagram showing a maximum inscribed circle according to an embodiment of this disclosure;
FIG. 3D is a schematic diagram showing a first position according to an embodiment of this disclosure;
FIG. 3E is another schematic diagram showing a first position according to an embodiment of this disclosure;
FIG. 3F is a schematic diagram showing an operation scenario of a method for controlling a mobile device according to an embodiment of this disclosure;
FIG. 4 is a schematic flowchart of yet another method for controlling a mobile device according to an embodiment of this disclosure;
FIG. 5 is a schematic structural diagram of a mobile device according to an embodiment of this disclosure;
FIG. 6 is a functional unit block diagram of an apparatus for controlling a mobile device according to an embodiment of this disclosure.

## DETAILED DESCRIPTION

In order to enable those skilled in the art to better understand solutions of this disclosure, technical solutions in embodiments of this disclosure will be described clearly and completely in combination with accompanying drawings. Apparently, the described embodiments are only a part of the embodiments of this disclosure, not all of them.
Based on the embodiments in this disclosure, all other embodiments obtained by those of ordinary skill in the art without creative work shall fall within the protection scope of this disclosure. Terms 'first', 'second', and the like in the specification, the claims, and the accompanying drawings are used to distinguish different objects, and are not intended to describe a specific order. In addition, terms 'including', 'having', and any variations thereof are intended to cover non-exclusive inclusion. For example, a process, a method, a system, a product, or a device including a series of steps or units is not limited to the listed steps or units, but optionally further includes steps or units not listed, or optionally further includes other steps or units inherent to the process, method, product, or device. Mentioning 'an embodiment' herein means that a specific feature, structure, or characteristic described in combination with the embodiment can be included in at least one embodiment of this disclosure. The appearance of the phrase in various positions in the specification does not necessarily refer to the same embodiment, nor is it an independent or alternative embodiment mutually exclusive with other embodiments. It is explicitly and implicitly understood by those skilled in the art that the embodiments described herein can be combined with other embodiments.
In an embodiment of this disclosure, a mobile device may include at least one of the following: a lawn mowing robot, a walking robot, an intelligent vehicle, and the like, which is not limited herein, or the mobile device may be another robot having related functions described in the embodiments of this disclosure. In an embodiment of this disclosure, the mobile device may be equipped with a satellite positioning device, a non-satellite positioning device, and a camera. The satellite positioning device can be used to achieve positioning through a satellite positioning technology, such as a Real-time kinetic (RTK) technology. The non-satellite positioning device can be used to achieve positioning through a non-satellite positioning technology. Specifically, when a satellite positioning signal does not satisfy a preset condition, positioning is achieved through the non-satellite positioning device using the non-satellite positioning technology; otherwise, when the satellite positioning signal satisfies the preset condition, positioning is achieved through the satellite positioning device using the satellite positioning technology. The camera can be used to capture environment images. The camera can include a rear-view camera whose lens is arranged toward an upper rear of the mobile device. Herein, the non-satellite positioning technology may include at least one of the following: visual positioning, Inertial Measurement Unit (IMU) positioning, Visual-Inertial Odometry (VIO) positioning, and the like, which is not limited herein. The embodiments of this disclosure are described in detail below.

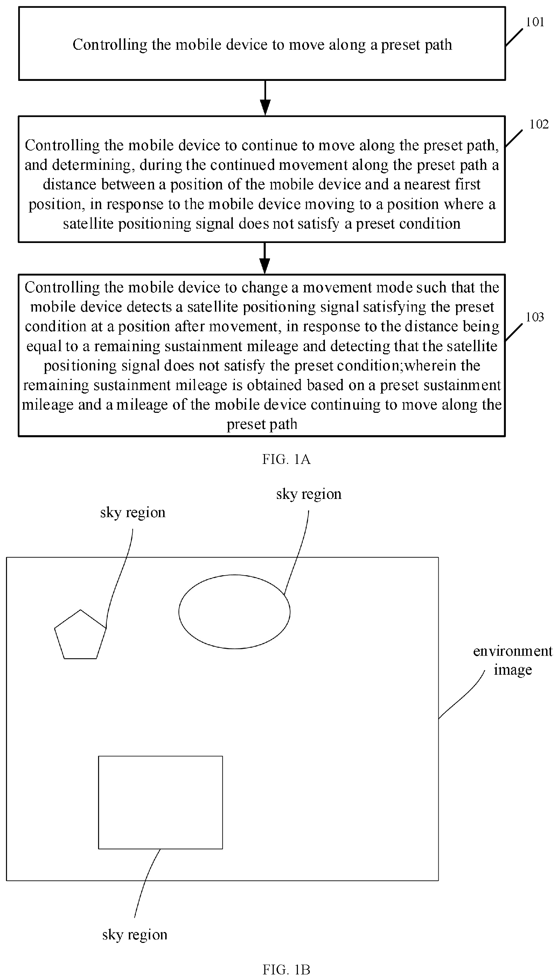

Reference is made to FIG. 1A, which is a schematic flowchart of a method for controlling a mobile device according to an embodiment of this disclosure. As shown in the figure, the method for controlling a mobile device includes:

101. Controlling the mobile device to move along a preset path.

The preset path may be a pre-planned path or a system default planned path.

In a specific implementation, a mobile device may be a lawn mowing robot, and the lawn mowing robot can be controlled to travel along the planned path and perform a mowing operation. When the mobile device moves to a position where a satellite positioning signal satisfies a preset condition, a satellite positioning technology is used to control the mobile device to move along the preset path. When the mobile device moves to a position where a satellite positioning signal does not satisfy the preset condition, a non-satellite positioning technology is used to control the mobile device to move along the preset path.

102. Controlling the mobile device to continue to move along the preset path, and determining, during the continued movement along the preset path a distance between a position of the mobile device and a nearest first position, in response to the mobile device moving to a position where a satellite positioning signal does not satisfy a preset condition.

In an embodiment of this disclosure, a preset condition can be set in advance or be a system default. Signal quality of a satellite positioning signal affects accuracy of satellite positioning, and the preset condition is used to evaluate the signal quality. For example, when the signal strength of the satellite positioning signal is greater than a preset signal strength threshold, it indicates that the signal quality of the satellite positioning signal satisfies the preset condition; otherwise, if the signal strength of the satellite positioning signal is less than or equal to the preset signal strength threshold, it indicates that the signal quality of the satellite positioning signal does not satisfy the preset condition. The preset signal strength threshold can be set in advance or be a system default.

The satellite positioning signal may include a Real-time kinetic (RTK) signal.

In a specific implementation, when the mobile device moves to a position where the satellite positioning signal does not satisfy the preset condition, a non-satellite positioning technology is used to control the mobile device to continue moving along the preset path, and during the process of continuing moving along the preset path, a distance between the position of the mobile device and the nearest first position is determined. The sky above the first position is unobstructed, thereby facilitating reception of the satellite positioning signal.

The nearest first position is a first position, among a plurality of stored first positions, that is nearest to the mobile device. During movement of the mobile device, as the position of the mobile device changes, the first position nearest to the mobile device may change, or may remain unchanged.

For example, the mobile device may determine distances between a position of the mobile device and the plurality of stored first positions to obtain at least one distance, and select a minimum value among the at least one distance. The first position corresponding to the minimum value is the nearest first position. Since the position of the mobile device is changing, the distance between the position of the mobile device and the first position is also changing; thus, the first position nearest to the mobile device change, or may remain unchanged.

Optionally, the first position is a projection coordinate on the ground of a sky region in an environment image captured by a camera of the mobile device.

The mobile device may include a rear-view camera having a lens facing the rear and upper portion of the mobile device, which can be used to find a position at which an overhead area is open and satellite signals are not blocked.

In an embodiment of this disclosure, the camera of the mobile device can be controlled to capture images at preset time intervals to obtain environment images, and a projection coordinates of sky regions in the environment images on the ground are stored as first positions, so as to use the first positions to guide the mobile device to reach open areas, i.e., satellite positioning can be used again in the open areas. Herein, the preset time interval can be set in advance or be a system default.

Optionally, the following steps may also be included: capturing at least one environment image through the camera and storing at least one first position during movement of the mobile device along the preset path.

In an embodiment of this disclosure, during moving of the mobile device along the preset path, at least one environment image can be captured through the camera to obtain a corresponding first position which is then stored.

Optionally, the above step of capturing at least one environment image through the camera and storing at least one first position during movement of the mobile device along the preset path can be implemented in the following manner:

capturing at least one environment image through the camera during a process of the mobile device moving along the preset path, and obtaining a maximum inscribed circle of a sky region in the environment image; and storing coordinate of a center of the maximum inscribed circle projected on the ground as a first position when a radius of the maximum inscribed circle is greater than a preset radius.

The preset radius can be set in advance or be a system default. The preset radius is used to ensure that the sky region is sufficiently large and open, filtering out some small sky regions. In a specific implementation, during moving along the preset path, at least one environment image can be captured through the camera. There may be k sky regions in each environment image, and a first position is extracted for each environment image. Thus, there may also be one or more first positions, where k is a natural number, such as 0, 1, 2, and so on. A maximum inscribed circle of the sky region in the environment image is taken, and if a radius of the maximum inscribed circle is greater than the preset radius, a coordinate of a center of the maximum inscribed circle projected on the ground is stored as the first position.

For example, if there is no object blocking the environment, the entire area in the environment image will be a sky region. Due to blockages by other objects in the environment (such as houses, trees), one sky region might be divided into a plurity of sky regions by those objects. As shown in FIG. 1B, the environmental image may include a plurality of sky regions. The center of circle is taken because the satellite signal at the center of circle position can be considered to be the best. Since areas around the sky region are non-sky regions where satellite positioning is poor due to blockages by surrounding obstacles, taking the center can be understood to some extent as the position corresponding to the center point being less affected by surrounding obstacles; thus, the satellite signal is the best.

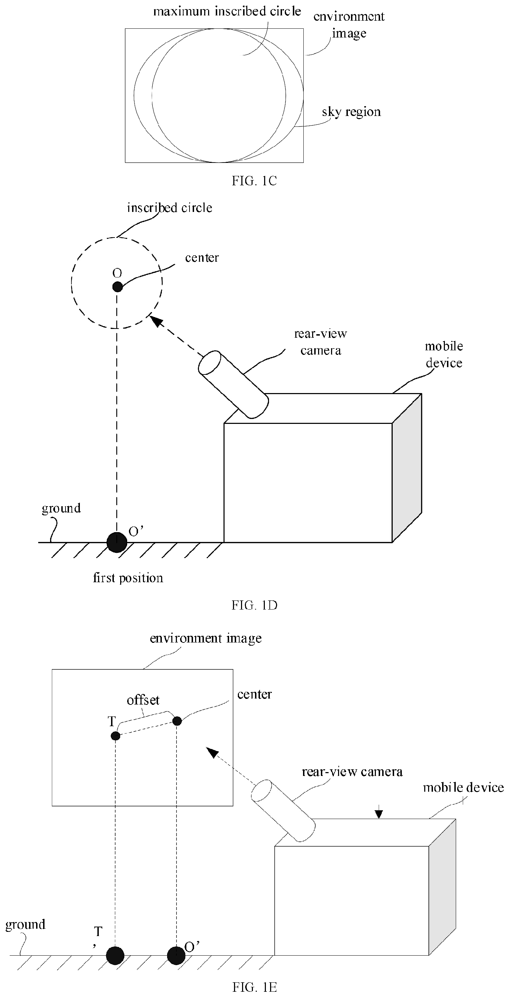

For example, as shown in FIG. 1C, a rectangle represents an environment image, an ellipse represents the sky region, and a circle represents a maximum inscribed circle of the sky region. Furthermore, as shown in FIG. 1D, the mobile device may include a rear-view camera. The rear-view camera is used to capture the sky to obtain an environment image. A coordinate O' of a center O of an inscribed circle of the sky region in the environment image projected on the ground is stored as a first position.

For example, in a specific implementation, while moving along the preset path, environment images can be continuously captured through the rear-view camera, and a maximum inscribed circle of a sky region in the environment image is obtained, i.e., identifying the sky region in the environment image and then determining the maximum inscribed circle. When a radius of the maximum inscribed circle is greater than a preset radius, a center coordinate of the maximum inscribed circle projected on the lawn is recorded as a first position; otherwise, when the radius of the maximum inscribed circle is less than or equal to the preset radius, the center coordinate may not be recorded.

In a specific implementation, the projection coordinate of the center of the inscribed circle on the ground can be determined in the following manner: identifying a spatial coordinate (X1, Y1, Z1) of an obstacle through image recognition, calculating an offset ($\Delta X$, $\Delta Y$) between a pixel coordinate of the obstacle and a pixel coordinate of the center of the inscribed circle of the sky region, and determining a projection coordinate (X1+$\Delta X'$, Y1+$\Delta Y'$) of the center of the inscribed circle on the ground according to the offset and the spatial coordinate (X1, Y1, Z1) of the obstacle. X1, Y1 are ground coordinates, and Z1 is a height coordinate. ($\Delta X'$, $\Delta Y'$) has a preset mapping relationship with the offset ($\Delta X$, $\Delta Y$).

For example, on the basis of FIG. 1D, referring to FIG. 1E, point T is a position of an obstacle, its corresponding spatial coordinate is (X1, Y1, Z1); and T' is a projection of the position of the obstacle on the ground, i.e., (X1, Y1, 0). Since projection is ultimately needed, the height can be ignored. A spatial two-dimensional coordinate of point O is (X2, Y2); therefore, a spatial two-dimensional coordinate of point O' is also (X2, Y2). The offset ($\Delta X$, $\Delta Y$) can be calculated as follows: $\Delta X$ = X component of pixel coordinate of point O - X component of pixel coordinate of point T, and $\Delta Y$ = Y component of pixel coordinate of point O - Y component of pixel coordinate of point T. Then, through a preset mapping relationship, a spatial coordinate offset ($\Delta X'$, $\Delta Y'$) can be obtained according to the pixel coordinate offset ($\Delta X$, $\Delta Y$), and then the coordinate of point O' can be obtained as (X1+$\Delta X'$, Y1+$\Delta Y'$).

Specifically, environment images can be captured through the rear-view camera at preset time intervals. The preset time interval can be set in advance or be a system default. This is equivalent to obtaining the maximum inscribed circle of the sky region in an environment image every preset time interval, i.e., identifying the sky region in the environment image and then determining the maximum inscribed circle. When the radius of the maximum inscribed circle is greater than a preset radius, the center coordinate of the inscribed circle projected on the lawn is recorded as a first position. Because recording is continuous, a first position list will be recorded, consisting of multiple first positions that satisfy the requirements.

In a specific implementation, a satellite positioning signal may include a satellite signal. Taking a lawn mowing robot as an example, during a process of the lawn mowing robot performing a lawn mowing operation along a preset path, if the satellite signal is strong, satellite positioning is used to enable the lawn mowing robot to move along the preset path. While moving along the preset path, the lawn mowing robot continuously captures environment images through the rear-view camera, and takes a maximum inscribed circle of a sky region in each image. If the inscribed circle is greater than a preset radius, a coordinate of a center of the inscribed circle is recorded as a first position, where the first position specifically refers to a coordinate of the center projected on the lawn.

103. Controlling the mobile device to change a movement mode such that the mobile device detects a satellite positioning signal satisfying the preset condition at a position after movement, in response to the distance being equal to a remaining sustainment mileage and detecting that the satellite positioning signal does not satisfy the preset condition;wherein the remaining sustainment mileage is obtained based on a preset sustainment mileage and a mileage of the mobile device continuing to move along the preset path.

Herein, a preset sustainment mileage can be set in advance or be a system default. It can be considered that within the preset sustainment mileage, accurate positioning can be ensured through a non-satellite positioning technology. For example, according to performance of an IMU device or a VIO device, the preset sustainment mileage can be determined to be 100 meters.

In a specific implementation, an initial point is a position of the mobile device when the distance between the mobile device and the nearest first position is equal to the remaining sustainment mileage. For safety consideration, high-precision positioning needs to be maintained during moving from the initial point to the first position so as to avoid the mobile device falling into a forbidden zone or leaving the lawn. Therefore, in an embodiment of this disclosure, moving toward the nearest first position when the distance is equal to the remaining sustainment mileage can ensure high-precision positioning during the process of moving from the initial point to the first position.

For example, taking a lawn mowing robot as an example of a mobile device, accurate positioning can be maintained within a certain distance when the satellite positioning signal does not satisfy the condition. When a distance from the lawn mowing robot to the nearest first position is equal to the remaining sustainment mileage, it indicates that if the lawn mowing robot does not go to the first position, it might result in the distance to a subsequent nearest first position also being greater than the remaining sustainment mileage, rendering the lawn mowing robot unable to accurately reach the position of the first position.

In addition, in order to reduce frequency of the lawn mowing robot leaving the preset path to the first position and to ensure efficiency of the lawn mowing robot mowing on the preset path, if the lawn mowing robot travels for only a short distance along the preset path before going to the first position when a satellite signal is poor, it will lead to the lawn mowing robot frequently going to the first position and low mowing efficiency. It is also unnecessary for the lawn mowing robot to go to the first position as soon as a satellite signal becomes poor, because positioning coordinates obtained by the lawn mowing robot at that moment are still accurate and there is no need to calibrate them at the first position.

In an embodiment of this disclosure, the remaining sustainment mileage is obtained based on a preset sustainment mileage and a mileage of the mobile device continuing to move along the preset path. In response to the distance being equal to the remaining sustainment mileage, if detecting that the satellite positioning signal does not satisfy the preset condition, then the mobile device is controlled to move toward the nearest first position, such that the satellite positioning signal is detected to satisfy the preset condition at a position after moving of the mobile device. The first position is used to guide the mobile device to reach an open area (an area where the satellite positioning signal satisfies the preset condition), such that satellite positioning can be used again in the open area. Thus, coordinates obtained through satellite positioning in the open area can be used to calibrate the position of the mobile device, improving positioning accuracy and solving the problem of inaccurate satellite positioning due to blockages affecting movement of the lawn mowing robot.

Herein, the open area can be understood as an area with good quality of satellite positioning signals.

For example, in a specific implementation, if a poor satellite signal occurs during movement along a pre-planned path, endurance is maintained through VIO positioning, i.e., after the poor satellite signal occurs, the mobile device can continue to travel for a preset sustainment mileage of 100 meters, within which the mobile device can still obtain accurate positioning through VIO. During the VIO positioning endurance process (i.e., within the preset sustainment mileage of 100 meters), a remaining sustainment mileage (100 meters minus the already traveled mileage) is calculated, and a distance between the current position of the lawn mowing robot and the nearest first position is determined.

Optionally, the remaining sustainment mileage is equal to a difference obtained by subtracting the mileage of the mobile device continuing to move along the preset path from the preset sustainment mileage.

For example, the remaining sustainment mileage can be calculated according to the following formula: remaining sustainment mileage = preset sustainment mileage - mileage of the mobile device continuing to move along the preset path.
where the remaining sustainment mileage is greater than or equal to 0. Since the remaining sustainment mileage is within the preset sustainment mileage, positioning of the mobile device can be considered as accurate.

Optionally, the following steps may also be included: controlling the mobile device to return to an initial point after detecting that a satellite positioning signal satisfies the preset condition at the position after movement, and positioning the mobile device during a process of returning; wherein the mobile device is positioned using a satellite positioning technology when the mobile device moves to a position where the satellite positioning signal satisfies the preset condition, and the mobile device is positioned using a non-satellite positioning technology when the mobile device moves to a position where the satellite positioning signal does not satisfy the preset condition.

Herein, the initial point being a position of the mobile device when the distance is equal to the remaining sustainment mileage.

In a specific implementation, after detecting that the satellite positioning signal satisfies the preset condition at the position after moving of the mobile device, the mobile device is controlled to return to the initial point, and during the return process, the mobile device is positioned. Specifically, when the mobile device moves to a position where the satellite positioning signal satisfies the preset condition, a satellite positioning technology is used for positioning; and when the mobile device moves to a position where the satellite positioning signal does not satisfy the preset condition, a non-satellite positioning technology is used for positioning. Thus, the problem of inaccurate satellite positioning due to blockages affecting movement of the mobile device can be solved.

Optionally, the following step may also be included: performing the step of controlling the mobile device to move along the preset path again after the mobile device returns to the initial point.

Specifically, after the mobile device returns to the initial point, steps 101 to 103 are performed again.

In an embodiment of this disclosure, after the mobile device returns to the initial point, the mobile device can be controlled to move along the preset path. Since the mobile device is still within the remaining sustainment mileage during the process of moving toward the first position (the center), the mobile device can still be accurately positioned to reach the nearest first position.

For example, in an embodiment of this disclosure, after the mobile device reaches the open area, the mobile device is positioned through a satellite positioning technology to obtain a position of the mobile device in the open area, and the mobile device is controlled to return to the initial point. During the return process, the satellite positioning is first used; and after the satellite positioning fails, the visual positioning, the Inertial Measurement Unit (IMU) positioning, or the Visual-Inertial Odometry (VIO) positioning is used, which is combined with the obtained position of the open area to obtain a position of the initial point.

Specifically, after the mobile device reaches the open area (the nearest first position), satellite positioning is performed to obtain an absolute position of the mobile device in the open area. The mobile device is controlled to return to the initial point. During the return process, the satellite positioning is first used; and after the satellite positioning fails, the visual positioning, the IMU positioning, or the VIO positioning is used, which is combined with the obtained position of the open area to obtain the position of the initial point.

Optionally, the first position is a projection coordinate on the ground of a center of a maximum inscribed circle of a sky region in an environment image.

For example, as shown in FIG. 1D, the mobile device uses a rear-view camera to capture the sky to obtain an environment image, and takes a coordinate of a center of an inscribed circle of the sky region in the environment image projected on the ground as the first position. The first position is the projection coordinate on the ground of the center of the maximum inscribed circle of the sky region in the environment image.

Optionally, the step 103 of controlling the mobile device to move toward the nearest first position can be implemented in the following manner:

controlling the mobile device to stop moving, and then controlling the mobile device to move from the initial point toward the nearest first position; or controlling the mobile device to first move toward the nearest first position, and then stopping moving; or controlling the mobile device to move into a projection range on the ground of a maximum inscribed circle corresponding to the nearest first position; reducing a movement speed to a preset movement speed and moving for a first preset distance at the preset movement speed, in response to the mobile device entering the projection range on the ground of the maximum inscribed circle; stopping movement to wait for the satellite positioning signal of the mobile device to satisfy the preset condition; returning to the initial point when the satellite positioning signal of the mobile device satisfies the preset condition within a preset time period; and continuing to move for a second preset distance and waiting again for the satellite positioning signal of the mobile device to satisfy the preset condition, when the satellite positioning signal of the mobile device does not satisfy the preset condition within the preset time period.

Herein, the preset moving speed can be set in advance or be a system default. The preset time period can be set in advance or be a system default.

In a specific implementation, the mobile device can be controlled to stop moving and then move from the initial point toward the nearest first position. Alternatively, the mobile device can be controlled to move to the nearest first position first and then stop moving. Alternatively, the mobile device can be controlled to move into the projection range on the ground of the maximum inscribed circle corresponding to the nearest first position; and after entering the projection range, the moving speed is reduced to the preset moving speed, the mobile device moves for the first preset distance at the preset moving speed and then stops to wait for the satellite positioning signal to satisfy the preset condition. If the satellite positioning signal satisfies the preset condition within the preset time period, the mobile device returns to the initial point; otherwise, it moves for another distance and waits again. For example, the mobile device is first controlled to quickly move into the projection range on the ground of the inscribed circle (the inscribed circle where the nearest first position is located), and after entering the projection range, the speed is slowed down and the mobile device moves for a distance and then stops to wait for the satellite signal to satisfy the preset condition. If the satellite signal is detected to satisfy the preset condition, it returns to the initial point; otherwise, it continues to move for a certain distance and waits again. That is, the first position is used to guide the mobile device to reach an open area (an area where the satellite positioning signal satisfies the preset condition) where satellite positioning can be used again, thereby solving the problem of inaccurate satellite positioning due to blockages affecting movement of the lawn mowing robot.

Optionally, the following step may also be included: controlling the mobile device to continue to move along the preset path, in response to the distance being greater than or less than the remaining sustainment mileage.

In an embodiment of this disclosure, when the distance is greater than the remaining sustainment mileage, the mobile device may not be able to accurately reach the nearest first position; thus, the mobile device does not stop moving but is controlled to continue to travel until the satellite positioning signal satisfies the preset condition.

In an embodiment of this disclosure, if the mobile device leaves the preset path for the first position when the distance is less than the remaining sustainment mileage, the mobile device will go to the first position frequently and operational efficiency will be low. Since the frequency of the mobile device leaving the preset path for the first position needs to be reduced to ensure efficiency of the mobile device performing operations on the preset path, the mobile device is controlled to continue moving along the preset path when the distance is less than the remaining sustainment mileage.

For example, if the lawn mowing robot goes to the first position after traveling for only 1 meter along the preset path when a satellite signal is poor, it will lead to the lawn mowing robot frequently going to the first position and low operational efficiency. It is also unnecessary for the mobile device to go to the first position as soon as the satellite signal becomes poor, because the positioning coordinates obtained by the mobile device at that moment are still accurate and there is no need to calibrate them at the first position.

For example, if it is detected that the distance between the nearest first position and the current position of the mobile device is greater than the remaining sustainment mileage, the mobile device is controlled to continue traveling until the satellite signal satisfies the preset condition. For example, when the mobile device is at a starting point of the preset sustainment mileage of 100 meters (i.e., a position where the satellite signal just becomes poor) and finds that the distance to the nearest first position is greater than 100 meters, the mobile device may not be able to accurately reach the nearest first position; thus, no stop operation is performed.

Optionally, the following step may also be included: positioning the mobile device using a non-satellite positioning technology to control the mobile device to continue to move along the preset path, in a case where the satellite positioning signal does not satisfy the preset condition.

In an embodiment of this disclosure, when the satellite positioning signal does not satisfy the preset condition, it indicates that the satellite positioning signal is weak and satellite positioning may be inaccurate. Thus, the mobile device can be positioned through a non-satellite positioning technology to control the mobile device to continue to move along the preset path. In this way, accurate positioning can be maintained, and accurate positioning within the preset sustainment mileage can be realized, thereby solving the problem of inaccurate satellite positioning due to blockages affecting movement of the lawn mowing robot.

Optionally, when trees and houses exist in an operation area of the mobile device, the following steps may also be included:

> obtaining a tree height and a house height in the operation area;
> and determining the preset radius according to the tree height and the house height.

Herein, when trees and houses exist in an operation area of a robot, the tree height may refer to an average height of all trees, or may refer to a height of one of the trees. The house height may refer to an average height of all houses, or may refer to a height of one of the houses. In an embodiment of this disclosure, when trees and houses exist in the operation area of the mobile device, the preset radius can be determined according to the tree height and the house height. Thus, a corresponding preset radius can be determined based on an actual environment, which helps improve accuracy of identifying the open area.

Optionally, the above step of determining the preset radius according to the tree height and the house height can be implemented in the following manner: determining the preset radius according to the following formula:

$$\text{preset radius} = \text{tree height} / \text{house height} * \pi / 4.$$

In a specific implementation, preset radius = tree height / house height $* \pi / 4$. For example, heights of trees or houses that may affect signals in the operation area can be pre-obtained, and an average height of these objects can be calculated to determine the preset radius. Thus, a corresponding preset radius can be determined based on an actual environment, which helps improve accuracy of identifying the open area.

For example, taking a lawn mowing robot as an example of a mobile device, a rear-view camera whose lens is arranged toward an upper rear of the lawn mowing robot is installed on the lawn mowing robot. The lawn mowing robot can perform a method for controlling a mobile device according to the following steps:

> S1. During a process of the lawn mowing robot performing a lawn mowing operation along a planned path, if an RTK signal is strong, RTK positioning is used to enable the lawn mowing robot to move along the planned path. While moving along the planned path, the lawn mowing robot continuously captures environment images through the rear-view camera, and takes a maximum inscribed circle of a sky region in each image. If the inscribed circle is greater than a preset radius, a coordinate of a center of the inscribed circle projected on the ground is recorded as a first position.

S2. In response to a case where an RTK signal is poor during moving along the planned path, endurance is maintained through VIO positioning, i.e., the lawn mowing robot can continue to travel for a preset sustainment mileage of 100 meters after the poor RTK signal occurs, and the lawn mowing robot can still obtain accurate positioning through VIO within the preset sustainment mileage. During the VIO positioning endurance process (i.e., within the preset sustainment mileage of 100 meters), a remaining sustainment mileage (100 meters minus the already traveled mileage) is calculated, and a distance between a current position of the lawn mowing robot and a nearest first position is determined. If the distance to the nearest first position is less than the remaining sustainment mileage, the lawn mowing robot continues to walk. If the distance to the nearest first position is equal to the remaining sustainment mileage, the lawn mowing robot performs step S3.

S3. If the distance to the nearest first position is equal to the remaining sustainment mileage, the lawn mowing robot is controlled to move toward the nearest first position, such that the lawn mowing robot reaches an open area.

S4. After reaching the open area (the nearest first position), the lawn mowing robot performs RTK positioning to obtain an absolute position of the lawn mowing robot in the open area, so as to calibrate the position of the lawn mowing robot. Then, the lawn mowing robot is controlled to return to the initial point.

S5. Starting from the initial point, the lawn mowing robot continues to walk along the planned path to performed the lawn mowing operation. If the RTK signal has not recovered, visual positioning, IMU positioning, or VIO positioning is used during the process to control the lawn mowing robot to walk along the planned path. If the RTK signal recovers during continuing the operation, then RTK positioning is used. In addition, starting from the initial point, if a poor RTK signal is detected again, step S2 and subsequent steps are performed again.

Herein, recovery of the RTK signal can be understood as the RTK signal being strong, and non-recovery can be understood as the RTK signal being weak.

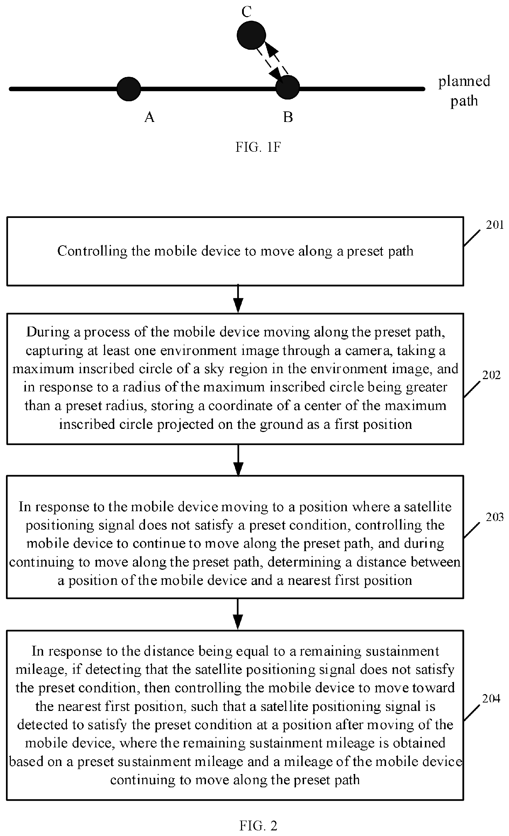

For example, as shown in FIG. 1F, during a process of the lawn mowing robot performing a lawn mowing operation along a planned path, if an RTK signal is poor during moving along the planned path, such as at position A, endurance is maintained through VIO positioning. That is, it can be understood that the endurance means that when the satellite positioning signal does not satisfy a condition, the lawn mowing robot can still maintain accurate positioning within a certain distance (preset sustainment mileage). Within the preset remaining sustainment mileage, the lawn mowing robot can still obtain accurate positioning through VIO. During the VIO positioning endurance process, a remaining sustainment mileage is calculated, and a distance between a current position of the lawn mowing robot and a nearest first position is determined. If a distance between the current position (position B) and the nearest first position (position C) is equal to the remaining sustainment mileage, the lawn mowing robot is controlled to move toward the nearest first position, i.e., moving from position B to position C, such that the lawn mowing robot reaches an open area. After reaching the open area (position C), the lawn mowing robot performs RTK positioning to obtain a position of the lawn mowing robot in the open area, and then moves from position C toward position B. Starting from the initial point (position B), the lawn mowing robot continues to walk along the planned path to perform the lawn mowing operation.

By using the method for controlling a mobile device described in this disclosure, the mobile device is controlled to move along a preset path. When the mobile device moves to a position where a satellite positioning signal does not satisfy a preset condition, the mobile device is controlled to continue to move along the preset path, and during continuing to move along the preset path, a distance between the position of the mobile device and a nearest first position is determined. In response to the distance being equal to a remaining sustainment mileage, if detecting that the satellite positioning signal does not satisfy the preset condition, then the mobile device is controlled to move toward the nearest first position, such that a satellite positioning signal is detected to satisfy the preset condition at a position after moving of the mobile device. The remaining sustainment mileage is obtained based on a preset sustainment mileage and a mileage of the mobile device continuing to move along the preset path. Furthermore, accurate positioning can be maintained within a certain distance even when the satellite positioning signal does not satisfy the condition. When the distance from the mobile device to the nearest first position is equal to the remaining sustainment mileage, it indicates that if the mobile device does not go to the first position, it might result in the distance to a subsequent nearest first position also being greater than the remaining sustainment mileage, rendering the mobile device unable to accurately reach the position of the first position. Therefore, when the distance between the mobile device and the nearest first position is equal to the remaining sustainment mileage and the satellite positioning signal still does not satisfy the condition, choosing to move toward the nearest first position can reduce frequency of going to the first position and ensure operation efficiency. Thus, it can also be ensured that the mobile device can accurately reach the position of the first position, and the first position is used to guide the mobile device to reach an open area (an area where the satellite positioning signal satisfies a preset condition) where satellite positioning can be used again, thereby solving the problem of inaccurate satellite positioning due to blockages affecting movement of the lawn mowing robot.

Reference is made to FIG. 2, which is a schematic flowchart of another method for controlling a mobile device according to an embodiment of this disclosure. As shown in the figure, the method for controlling a mobile device includes:

201. Controlling the mobile device to move along a preset path.

202. During a process of the mobile device moving along the preset path, capturing at least one environment image through a camera, taking a maximum inscribed circle of a sky region in the environment image, and in response to a radius of the maximum inscribed circle being greater than a preset radius, storing a coordinate of a center of the maximum inscribed circle projected on the ground as a first position.

203. In response to the mobile device moving to a position where a satellite positioning signal does not satisfy a preset condition, controlling the mobile device to continue to move along the preset path, and during continuing to move along the preset path, determining a distance between a position of the mobile device and a nearest first position.

204. In response to the distance being equal to a remaining sustainment mileage, if detecting that the satellite positioning signal does not satisfy the preset condition, then controlling the mobile device to move toward the nearest first position, such that a satellite positioning signal is detected to satisfy the preset condition at a position after moving of the mobile device, where the remaining sustainment mileage is obtained based on a preset sustainment mileage and a mileage of the mobile device continuing to move along the preset path.

Specific descriptions for the steps 201 to 204 can be found in related steps of the method for controlling a mobile device described in FIG. 1A, and details are not described herein again.

By using the method for controlling a mobile device described in this disclosure, the mobile device is controlled to move along a preset path. During the process of the mobile device moving along the preset path, at least one environment image is captured through the camera, a maximum inscribed circle of a sky region in the environment image is taken, and if a radius of the maximum inscribed circle is greater than a preset radius, a coordinate of a center of the maximum inscribed circle projected on the ground is stored as a first position. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if detecting that the satellite positioning signal does not satisfy the preset condition, then the mobile device is controlled to move toward the nearest first position, such that a satellite positioning signal is detected to satisfy the preset condition at a position after moving of the mobile device, where the remaining sustainment mileage is obtained based on a preset sustainment mileage and a mileage of the mobile device continuing to move along the preset path. Furthermore, accurate positioning can be maintained within a certain distance even when the satellite positioning signal does not satisfy the condition. When the distance from the mobile device to the nearest first position is equal to the remaining sustainment mileage, it indicates that if the mobile device does not go to the first position, it might result in the distance to a subsequent nearest first position also being greater than the remaining sustainment mileage, rendering the mobile device unable to accurately reach the position of the first position. Therefore, when the distance between the mobile device and the nearest first position is equal to the remaining sustainment mileage and the satellite positioning signal still does not satisfy the condition, choosing to move toward the nearest first position can reduce frequency of going to the first position and ensure operation efficiency. Thus, it can also be ensured that the mobile device can accurately reach the position of the first position, and the first position is used to guide the mobile device to reach an open area (an area where the satellite positioning signal satisfies a preset condition) where satellite positioning can be used again, thereby solving the problem of inaccurate satellite positioning due to blockages affecting movement of the lawn mowing robot.

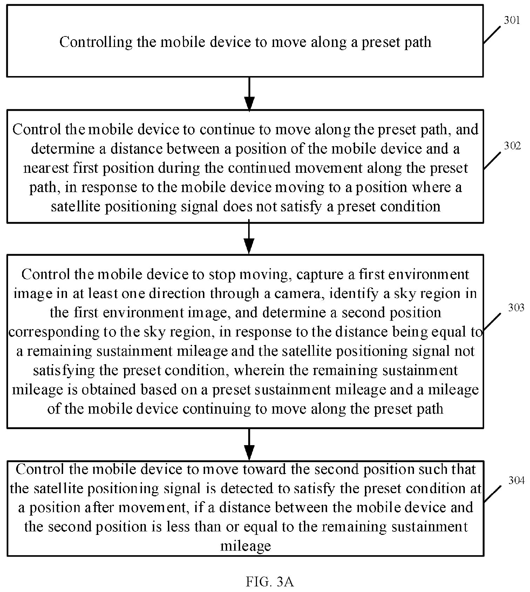

Reference is made to FIG. 3A, which is a schematic flowchart of still another method for controlling a mobile device according to an embodiment of this disclosure. As shown in the figure, the method for controlling a mobile device includes:
301. Controlling the mobile device to move along a preset path.

Herein, the preset path can be a pre-planned path or a system default planned path.

In a specific implementation, a mobile device may include a lawn mowing robot, and the lawn mowing robot can be controlled to walk and perform a lawn mowing operation along a planned path. When the mobile device moves to a position where a satellite positioning signal satisfies a preset condition, a satellite positioning technology is used to control the mobile device to move along the preset path. When the mobile device moves to a position where a satellite positioning signal does not satisfy the preset condition, a non-satellite positioning technology is used to control the mobile device to move along the preset path.

302. Control the mobile device to continue to move along the preset path, and determine a distance between a position of the mobile device and a nearest first position during the continued movement along the preset path, in response to the mobile device moving to a position where a satellite positioning signal does not satisfy a preset condition.

In an embodiment of this disclosure, a preset condition can be set in advance or be a system default. Signal quality of a satellite positioning signal affects accuracy of satellite positioning, and the preset condition is used to evaluate the signal quality. For example, if signal strength of the satellite positioning signal is greater than a preset signal strength threshold, it indicates that the signal quality of the satellite positioning signal satisfies the preset condition; otherwise, if the signal strength of the satellite positioning signal is less than or equal to the preset signal strength threshold, it indicates that the signal quality of the satellite positioning signal does not satisfy the preset condition. The preset signal strength threshold can be set in advance or be a system default.

Herein, the satellite positioning signal may include a Real-time kinetic (RTK) signal.

In a specific implementation, when the mobile device moves to a position where the satellite positioning signal does not satisfy the preset condition, a non-satellite positioning technology is used to control the mobile device to continue moving along the preset path, and during the process of continuing moving along the preset path, a distance between the position of the mobile device and the nearest first position is determined. Herein, the sky above the first position is open, facilitating reception of the satellite positioning signal.

Herein, the nearest first position is the one nearest to the mobile device among a plurality of stored first positions. During movement of the mobile device, as the position of the mobile device changes, the first position nearest to the mobile device may or may not change.

For example, the mobile device may determine distances between its position and a plurality of stored first positions to obtain at least one distance, and select a minimum value among the at least one distance. The first position corresponding to the minimum value is the nearest first position. Since the position of the mobile device is changing, the distance between the position of the mobile device and the first position is also changing; thus, the first position nearest to the mobile device may or may not change.

Optionally, the first position is a projection coordinate on the ground of a sky region in a second environment image captured by a camera of the mobile device.

Herein, the mobile device may include a rear-view camera whose lens is arranged toward an upper rear of the mobile device, which can be used to find a position with an open sky where satellite signals are not blocked.

In an embodiment of this disclosure, the camera of the mobile device can be controlled to capture images at preset time intervals to obtain environment images, and projection coordinates of sky regions in the environment images on the ground are stored as first positions, so as to use the first positions to guide the mobile device to reach open areas, i.e., satellite positioning can be used again in the open areas.

Herein, the preset time interval can be set in advance or be a system default. Herein, the second environment image can be an image captured while performing a task in the same area previously, or the second environment image can be an image captured while moving along the preset path during performing the task this time.

Optionally, the first position is a projection coordinate on the ground of a center of a maximum inscribed circle of the sky region in the second environment image.

Herein, the first position can be the projection coordinate on the ground of the center of the maximum inscribed circle of the sky region in the second environment image. The center is taken because the satellite signal at the center position can be considered to be the best.

Optionally, the following steps may also be included: capturing at least one second environment image through the camera, and storing at least one first position during movement of the mobile device along the preset path.

In an embodiment of this disclosure, during moving of the mobile device along the preset path, at least one second environment image can be captured through the camera to obtain a corresponding first position which is then stored.

Optionally, the above step of capturing at least one second environment image through the camera, and storing at least one first position during movement of the mobile device along the preset path can be implemented in the following manner:

capturing at least one second environment image through the camera during a process of the mobile device moving along the preset path, and obtaining a maximum inscribed circle of a sky region in the second environment image, and storing a coordinate of a center of the maximum inscribed circle projected on the ground as a first position when a radius of the maximum inscribed circle is greater than a preset radius.

Herein, the first preset radius can be set in advance or be a system default. The first preset radius is used to ensure that the sky region is sufficiently large and open, filtering out some small sky regions. In a specific implementation, during moving along the preset path, at least one second environment image can be captured through the camera. There may be k sky regions in each environment image, and a first position is extracted for each environment image. Thus, there may also be one or more first positions, where k is a natural number, such as 0, 1, 2, and so on. A maximum inscribed circle of the sky region in the second environment image is taken, and if a radius of the maximum inscribed circle is greater than the first preset radius, a coordinate of a center of the maximum inscribed circle projected on the ground is stored as the first position.

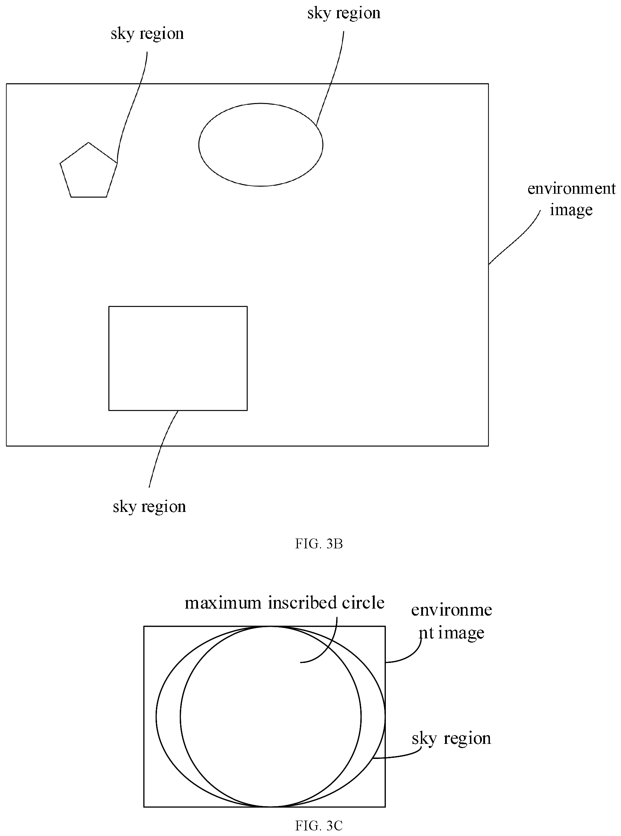

For example, if there is no object blocking the environment, the entire area in the environment image will be a sky region. Due to blockages by other objects in the environment (such as houses, trees), one sky region might be divided into multiple sky regions by those objects. As shown in FIG. 3B, multiple sky regions may exist in an environment image.

The center is taken because the satellite signal at the center position can be considered to be the best. Since areas around the sky region are non-sky regions where satellite positioning is poor due to blockages by surrounding obstacles, taking the center can be understood to some extent as the position corresponding to the center point being less affected by surrounding obstacles; thus, the satellite signal is the best.

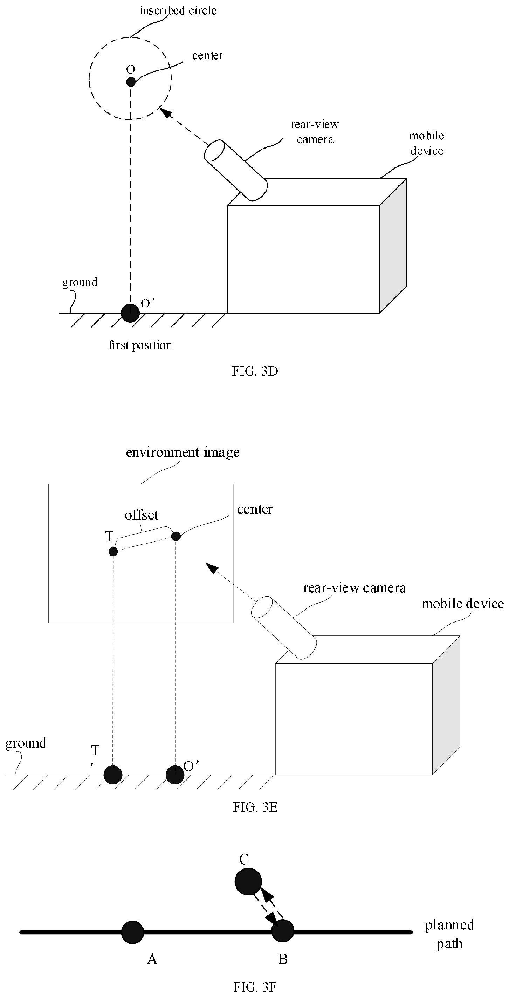

For example, as shown in FIG. 3C, a rectangle represents an environment image, an ellipse represents a sky region, and a circle represents a maximum inscribed circle of the sky region. Furthermore, as shown in FIG. 3D, the mobile device may include a rear-view camera. The rear-view camera is used to capture the sky to obtain an environment image. A coordinate O' of a center O of an inscribed circle of the sky region in the environment image projected on the ground is stored as a first position.

For example, in a specific implementation, while moving along the preset path, environment images can be continuously captured through the rear-view camera, and a maximum inscribed circle of a sky region in the environment image is obtained, i.e., identifying the sky region in the environment image and then determining the maximum inscribed circle. When a radius of the maximum inscribed circle is greater than the first preset radius, a center coordinate of the maximum inscribed circle projected on the lawn is recorded as a first position; otherwise, when the radius of the maximum inscribed circle is less than or equal to the first preset radius, the center coordinate may not be recorded.

In a specific implementation, the projection coordinate of the center of the inscribed circle on the ground can be determined in the following manner: identifying a spatial coordinate (X1, Y1, Z1) of an obstacle through image recognition, calculating an offset ($\Delta$X, $\Delta$Y) between a pixel coordinate of the obstacle and a pixel coordinate of the center of the inscribed circle of the sky region, and determining a projection coordinate (X1+$\Delta$X', Y1+$\Delta$Y') of the center of the inscribed circle on the ground according to the offset and the spatial coordinate (X1, Y1, Z1) of the obstacle. X1, Y1 are ground coordinates, and Z1 is a height coordinate. ($\Delta$X', $\Delta$Y') has a preset mapping relationship with the offset ($\Delta$X, $\Delta$Y).

For example, on the basis of FIG. 3D, referring to FIG. 3E, point T is a position of an obstacle, its corresponding spatial coordinate is (X1, Y1, Z1); and T' is a projection of the position of the obstacle on the ground, i.e., (X1, Y1, 0). Since projection is ultimately needed, the height can be ignored. A spatial two-dimensional coordinate of point O is (X2, Y2); therefore, a spatial two-dimensional coordinate of point O' is also (X2, Y2). The offset ($\Delta$X, $\Delta$Y) can be calculated as follows: $\Delta$X = X component of pixel coordinate of point O - X component of pixel coordinate of point T, and $\Delta$Y = Y component of pixel coordinate of point O - Y component of pixel coordinate of point T. Then, through a preset mapping relationship, a spatial coordinate offset ($\Delta$X', $\Delta$Y') can be obtained according to the pixel coordinate offset ($\Delta$X, $\Delta$Y), and then the coordinate of point O' can be obtained as (X1+$\Delta$X', Y1+$\Delta$Y').

Specifically, environment images can be captured through the rear-view camera at preset time intervals. The preset time interval can be set in advance or be a system default. This is equivalent to obtaining the maximum inscribed circle of the sky region in an environment image every preset time interval, i.e., identifying the sky region in the environment image and then determining the maximum inscribed circle. When the radius of the maximum inscribed circle is greater than the first preset radius, the center coordinate of the inscribed circle projected on the lawn is recorded as a first position. Because recording is continuous, a first position list will be recorded, consisting of multiple first positions that satisfy the requirements.

In a specific implementation, a satellite positioning signal may include a satellite signal. Taking a lawn mowing robot as an example, during a process of the lawn mowing robot performing a lawn mowing operation along a preset path, if the satellite signal is strong, satellite positioning is used to enable the lawn mowing robot to move along the preset path. While moving along the preset path, the lawn mowing robot continuously captures environment images through the rear-view camera, and takes a maximum inscribed circle of a sky region in each image. If the inscribed circle is greater than the first preset radius, a coordinate of a center of the inscribed circle is recorded as a first position, where the first position specifically refers to a coordinate of the center projected on the lawn.

Optionally, when trees and houses exist in an operation area of the mobile device, the following steps may also be included:

obtaining a tree height and a house height in the operation area; and
determining the first preset radius according to the tree height and the house height.

Herein, when trees and houses exist in an operation area of a robot, the tree height may refer to an average height of all trees, or may refer to a height of one of the trees. The house height may refer to an average height of all houses, or may refer to a height of one of the houses.

In an embodiment of this disclosure, when trees and houses exist in the operation area of the mobile device, the first preset radius can be determined according to the tree height and the house height. Thus, a corresponding first preset radius can be determined based on an actual environment, which helps improve accuracy of identifying the open area.

Optionally, the above step of determining the first preset radius according to the tree height and the house height can be implemented in the following manner:

determining the first preset radius according to the following formula:
first preset radius = tree height / house height * π / 4.

In a specific implementation, first preset radius = tree height / house height * π / 4. For example, heights of trees or houses that may affect signals in the operation area can be pre-obtained, and an average height of these objects can be calculated to determine the first preset radius. Thus, a corresponding first preset radius can be determined based on an actual environment, which helps improve accuracy of identifying the open area.

303. Control the mobile device to stop moving, capture a first environment image in at least one direction through a camera, identify a sky region in the first environment image, and determine a second position corresponding to the sky region, in response to the distance being equal to a remaining sustainment mileage and the satellite positioning signal not satisfying the preset condition, wherein the remaining sustainment mileage is obtained based on a preset sustainment mileage and a mileage of the mobile device continuing to move along the preset path.

Herein, a preset sustainment mileage can be set in advance or be a system default. It can be considered that within the preset sustainment mileage, accurate positioning can be ensured through a non-satellite positioning technology. For example, according to performance of an IMU device or a VIO device, the preset sustainment mileage can be determined to be 100 meters.

In a specific implementation, an initial point is a position of the mobile device when the distance between the mobile device and the nearest first position is equal to the remaining sustainment mileage. For safety consideration, high-precision positioning needs to be maintained during moving from the initial point to the first position so as to avoid the mobile device falling into a forbidden zone or leaving the lawn. Therefore, in an embodiment of this disclosure, moving toward the nearest first position when the distance is equal to the remaining sustainment mileage can ensure high-precision positioning during the process of moving from the initial point to the first position.

For example, taking a lawn mowing robot as an example of a mobile device, accurate positioning can be maintained within a certain distance even when the satellite positioning signal does not satisfy the condition. When a distance from the lawn mowing robot to the nearest first position is equal to the remaining sustainment mileage, the nearest first position can be used as a guarantee. Specifically, if a second position nearer than the nearest first position can be found by capturing environment images through rotate-in-place, the mobile device is controlled to go to the second position; otherwise, if there is no nearer second position, the lawn mowing robot is controlled to go to the nearest first position.

In addition, in order to reduce frequency of the lawn mowing robot leaving the preset path to the first position and to ensure efficiency of the lawn mowing robot mowing on the preset path, if the lawn mowing robot travels for only a short distance along the preset path before going to the first position when a satellite signal is poor, it will lead to the lawn mowing robot frequently going to the first position and low operational efficiency. It is also unnecessary for the lawn mowing robot to go to the first position as soon as a satellite signal becomes poor, because positioning coordinates obtained by the lawn mowing robot at that moment are still accurate and there is no need to calibrate them at the first position.

In an embodiment of this disclosure, the remaining sustainment mileage is obtained based on a preset sustainment mileage and a mileage of the mobile device continuing to move along the preset path. In response to the distance being equal to the remaining sustainment mileage, if detecting that the satellite positioning signal does not satisfy the preset condition, then the mobile device is controlled to move toward the nearest first position, such that the satellite positioning signal is detected to satisfy the preset condition at a position after moving of the mobile device. The first position is used to guide the mobile device to reach an open area (an area where the satellite positioning signal satisfies the preset condition), such that satellite positioning can be used again in the open area. Thus, coordinates obtained through satellite positioning in the open area can be used to calibrate the position of the mobile device, improving positioning accuracy and solving the problem of inaccurate satellite positioning due to blockages affecting movement of the lawn mowing robot.

Herein, the open area can be understood as an area with good quality of satellite positioning signals.

For example, in a specific implementation, if a poor satellite signal occurs during movement along a pre-planned path, endurance is maintained through VIO positioning, i.e., after the poor satellite signal occurs, the mobile device can continue to travel for a preset sustainment mileage of 100 meters, within which the mobile device can still obtain accurate positioning through VIO. During the VIO positioning endurance process (i.e., within the preset sustainment mileage of 100 meters), a remaining sustainment mileage (100 meters minus the already traveled mileage) is calculated, and a distance between the current position of the lawn mowing robot and the nearest first position is determined.

Optionally, the remaining sustainment mileage is equal to a difference obtained by subtracting the mileage of the mobile device continuing to move along the preset path from the preset sustainment mileage.

For example, the remaining sustainment mileage can be calculated according to the following formula:

remaining sustainment mileage = preset sustainment mileage - mileage of the mobile device continuing to move along the preset path.

where the remaining sustainment mileage is greater than or equal to 0. Since the remaining sustainment mileage is within the preset sustainment mileage, positioning of the mobile device can be considered as accurate.

Optionally, the second position is a projection coordinate on the ground of a sky region in the first environment image.

The sky region indicates that it is not blocked; thus, the second position is the projection coordinate on the ground of the sky region in the first environment image. It is highly likely that a satellite positioning signal at the projection coordinate is not affected by blocking obstacles, and a position where a satellite positioning signal satisfies a preset condition can very likely be quickly found at the projection position.

Optionally, the second position is a projection coordinate on the ground of a center of a maximum inscribed circle of a sky region in the first environment image.

Herein, the second position is the projection coordinate on the ground of the center of the maximum inscribed circle of the sky region in the first environment image. The center is taken because the satellite signal at the center position can be considered to be the best.

Optionally, the following step may also be included:
through controlling the mobile device to rotate in place so as to drive the camera to rotate, enabling the camera to capture the first environment image in at least one direction.

In an embodiment of this disclosure, after the mobile device stops moving, the mobile device can be controlled to rotate in place so as to drive the camera mounted on the mobile device to rotate together with the mobile device, such that the camera performs at least one capturing during the rotating process to obtain an environment image in at least one direction, and use the environment image to obtain a corresponding second position.

Optionally, the above step of determining the second position corresponding to the sky region can be implemented in the following manner:
obtaining a maximum inscribed circle of a sky region in the first environment image; and obtaining coordinates of a center of the maximum inscribed circle projected on the ground as the second position, in response to a radius of the maximum inscribed circle being greater than a second preset radius.

Herein, the second preset radius can be set in advance or be a system default. The second preset radius is used to ensure that the sky region is sufficiently large and open, filtering out some small sky regions. In a specific implementation, at least one environment image can be captured through the camera. There may be k sky regions in each environment image, and a second position is extracted for each environment image. Thus, there may also be one or more second positions, where k is a natural number, such as 0, 1, 2, and so on. A maximum inscribed circle of the sky region in the first environment image is taken, and if a radius of the maximum inscribed circle is greater than the second preset radius, a coordinate of a center of the maximum inscribed circle projected on the ground is obtained as the second position.

Herein, the second preset radius can also be set in advance or be a system default. The second preset radius can be the same as or different from the first preset radius.

Herein, the second position can be a position corresponding to a sky region identified from any first environment image. Capturing first environment images in multiple directions can increase the probability of finding sky regions.

304. Control the mobile device to move toward the second position such that the satellite positioning signal is detected to satisfy the preset condition at a position after movement, if a distance between the mobile device and the second position is less than or equal to the remaining sustainment mileage.

In a specific implementation, if the distance between the position of the mobile device and the second position is less than or equal to the remaining sustainment mileage, it indicates that the distance is within the preset sustainment mileage and high-precision positioning can be sustained. In addition, the newly found second position is closer to or as close to the mobile device as the nearest first position, leading to a more accurate positioning for the initial point (the position where the mobile device stops moving) during a return. Thus, the mobile device is controlled to move toward the second position, such that a satellite positioning signal is detected to satisfy the preset condition at a position after moving of the mobile device.

Optionally, the step 304 of controlling the mobile device to move toward the second position can be implemented in the following manner:

controlling the mobile device to stop moving after reaching the second position;

or controlling the mobile device to move into a projection range on the ground of a maximum inscribed circle corresponding to the second position, and in response to the mobile device entering the projection range on the ground of the maximum inscribed circle, reducing a moving speed to a preset moving speed, moving for a first preset distance at the preset moving speed, stopping moving to wait for a satellite positioning signal of the mobile device to satisfy the preset condition, and if the satellite positioning signal of the mobile device satisfies the preset condition within a preset time period, returning to the initial point; and if the satellite positioning signal of the mobile device does not satisfy the preset condition within the preset time period, continuing to move for a second preset distance and waiting again for the satellite positioning signal of the mobile device to satisfy the preset condition, where the initial point is the position where the mobile device stops moving.

Herein, the preset moving speed can be set in advance or be a system default. The preset time period can be set in advance or be a system default.

In a specific implementation, the mobile device can be controlled to stop moving after reaching the second position. Alternatively, the mobile device can be controlled to move into the projection range on the ground of the maximum inscribed circle corresponding to the second position; and after entering the projection range, the moving speed is reduced to the preset moving speed, the mobile device moves for the first preset distance at the preset moving speed and then stops to wait for the satellite positioning signal to satisfy the preset condition. If the satellite positioning signal satisfies the preset condition within the preset time period, the mobile device returns to the initial point; otherwise, it moves for another distance and waits again. For example, the mobile device is first controlled to quickly move into the projection range on the ground of the inscribed circle (the inscribed circle where the second position is located), and after entering the projection range, the speed is slowed down and the mobile device moves for a distance and then stops to wait for the satellite signal to satisfy the preset condition. If the satellite signal is detected to satisfy the preset condition, it returns to the initial point; otherwise, it continues to move for a certain distance and waits again. That is, the second position is used to guide the mobile device to reach an open area (an area where the satellite positioning signal satisfies the preset condition) where satellite positioning can be used again, thereby solving the problem of inaccurate satellite positioning due to blockages affecting movement of the lawn mowing robot.

Optionally, the following step may also be included:

controlling the mobile device to continue to move along the preset path, when a distance between a position of the mobile device and the nearest first position is greater than or less than the remaining sustainment mileage.

In an embodiment of this disclosure, when the distance between the position of the mobile device and the nearest first position is greater than the remaining sustainment mileage, the mobile device may not be able to accurately reach the nearest first position; thus, the mobile device does not stop moving but is controlled to continue to travel until the satellite positioning signal satisfies the preset condition.

In an embodiment of this disclosure, if the mobile device leaves the preset path for the first position when the distance between the position of the mobile device and the nearest first position is less than the remaining sustainment mileage, the mobile device will go to the first position frequently and operational efficiency will be low. Since the frequency of the mobile device leaving the preset path for the first position needs to be reduced to ensure efficiency of the mobile device performing operations on the preset path, the mobile device is controlled to continue moving along the preset path when the distance between the position of the mobile device and the nearest first position is less than the remaining sustainment mileage.

For example, if the lawn mowing robot goes to the first position after traveling for only 1 meter along the preset path when a satellite signal is poor, it will lead to the lawn mowing robot frequently going to the first position and low operational efficiency. It is also unnecessary for the mobile device to go to the first position as soon as the satellite signal becomes poor, because the positioning coordinates obtained by the mobile device at that moment are still accurate and there is no need to calibrate them at the first position.

For example, if it is detected that the distance between the nearest first position and the current position of the mobile device is greater than the remaining sustainment mileage, the mobile device is controlled to continue traveling until the satellite signal satisfies the preset condition. For example, when the mobile device is at a starting point of the preset sustainment mileage of 100 meters (i.e., a position where the satellite signal just becomes poor) and finds that the distance to the nearest first position is greater than 100 meters, the mobile device may not be able to accurately reach the nearest first position; thus, no stop operation is performed.

Optionally, the following step may also be included:

in response to the distance between the mobile device and the nearest first position being equal to the remaining sustainment mileage, if the satellite positioning signal satisfies the preset condition, then controlling the mobile device to move along the preset path through satellite positioning.

In a specific implementation, when the distance between the position of the mobile device and the nearest first position is equal to the remaining sustainment mileage, if it is detected that the satellite positioning signal satisfies the preset condition, it indicates that the satellite positioning signal is strong and the mobile device is controlled to move along the preset path through satellite positioning, so as to ensure that the mobile device accurately moves along the preset path.

Optionally, the following step may also be included:

if the distance between the mobile device and the second position is greater than the remaining sustainment mileage, then controlling the mobile device to move to the first position that is nearest to the position of the mobile device.

In a specific implementation, if the distance between the position of the mobile device and the second position is greater than the remaining sustainment mileage, it indicates that the distance is beyond the preset sustainment mileage and accurate positioning cannot be achieved. Thus, the mobile device is controlled to move to the first position nearest to the position of the mobile device, i.e., moving the mobile device to an open area where satellite positioning can be used again, thereby solving the problem of inaccurate satellite positioning due to blockages affecting movement of the lawn mowing robot.

Optionally, the following step may also be included:

controlling the mobile device to return to an initial point after detecting that a satellite positioning signal satisfies the preset condition at the position after movement, and positioning the mobile device during a process of returning; wherein the mobile device is positioned using a satellite positioning technology when the mobile device moves to a position where the satellite positioning signal satisfies the preset condition, and the mobile device is positioned using a non-satellite positioning technology when the mobile device moves to a position where the satellite positioning signal does not satisfy the preset condition, the initial point being a position where the mobile device stops moving.

Herein, the initial point is the position where the mobile device stops moving.

In a specific implementation, after detecting that the satellite positioning signal satisfies the preset condition at the position after moving of the mobile device, the mobile device is controlled to return to the initial point, and during the return process, the mobile device is positioned. Specifically, when the mobile device moves to a position where the satellite positioning signal satisfies the preset condition, a satellite positioning technology is used for positioning; and when the mobile device moves to a position where the satellite positioning signal does not satisfy the preset condition, a non-satellite positioning technology is used for positioning. Thus, the problem of inaccurate satellite positioning due to blockages affecting movement of the mobile device can be solved.

For example, taking a lawn mowing robot as an example of a mobile device, a rear camera whose lens is arranged toward an upper rear of the lawn mowing robot is installed on the lawn mowing robot. The lawn mowing robot can perform a method for controlling a mobile device according to the following steps:

S1. During a process of the lawn mowing robot performing a lawn mowing operation along a planned path, if a satellite positioning signal satisfies a preset condition, satellite positioning is used to enable the lawn mowing robot to move along the planned path. While moving along the planned path, the lawn mowing robot continuously captures environment images through the rear camera, and takes a maximum inscribed circle of a sky region in each image. If a radius of the inscribed circle is greater than a preset radius, a coordinate of a center of the inscribed circle is recorded as a first position.

S2. In response to a case where a satellite positioning signal does not satisfy the preset condition during moving along the planned path, endurance is maintained through VIO positioning, i.e., the lawn mowing robot can continue to travel for an sustainment mileage of 100 meters (not necessarily 100 meters, depending on Simultaneous Localization and Mapping (SLAM) performance) after the satellite positioning signal failing to satisfy the preset condition occurs, and the lawn mowing robot can still obtain accurate positioning through VIO within the sustainment mileage. During the VIO positioning endurance process (i.e., within the 100-meter sustainment mileage), a remaining sustainment mileage (100 meters minus the already traveled mileage) is calculated, and a distance between a current position of the lawn mowing robot and a nearest first position is determined. If the distance to the nearest first position is less than the remaining sustainment mileage, the lawn mowing robot continues to walk. If the distance to the nearest first position is equal to the remaining sustainment mileage, the lawn mowing robot stops walking and performs step S3. If it is detected that the distance from the nearest first position to the current position of the lawn mowing robot is greater than the remaining sustainment mileage, the lawn mowing robot is controlled to continue walking until the satellite positioning signal satisfies the preset condition (e.g., when the lawn mowing robot is at a starting point of the 100-meter sustainment mileage, i.e., a position where the satellite positioning signal just becomes unsatisfying, and finds that the distance to the nearest first position is greater than 100 meters). In this case, the lawn mowing robot may not be able to accurately reach the nearest position; thus, no stop operation is performed.

S3. If the distance to the nearest first position is equal to the remaining sustainment mileage, the lawn mowing robot stops walking. Then, the lawn mowing robot is controlled to rotate in place, and the rear camera is enabled to rotate together with the lawn mowing robot to capture environment images in different directions. Objects in environment images in different directions are identified. If a sky region is identified in an environment image, a maximum inscribed circle of the sky region in the image is taken. If a radius of the inscribed circle is greater than a preset radius and a distance from the lawn mowing robot to a center of the inscribed circle (i.e., a second position) is less than or equal to the remaining sustainment mileage, the lawn mowing robot is controlled to move toward the center coordinate of the inscribed circle (an inscribed circle center closer than the recorded nearest position can be found, improving positioning accuracy), such that the lawn mowing robot reaches an open area. Since the lawn mowing robot is still within the remaining sustainment mileage during moving toward the center coordinate, the lawn mowing robot can still be accurately positioned to reach the center coordinate (i.e., the second position).

S4. After reaching the open area, satellite positioning is performed to obtain an absolute position of the lawn mowing robot in the open area. Then, the lawn mowing robot is controlled to return to the initial point (the position where the lawn mowing robot rotated in place). During the return process, the satellite positioning is first used; and after the satellite positioning signal no longer satisfies the preset condition, the visual positioning, the IMU positioning, or the VIO positioning is used, which is combined with the obtained absolute position of the open area to obtain an absolute position of the initial point.

S5. Starting from the initial point, the lawn mowing robot continues to walk along the planned path to performed the lawn mowing operation. If the satellite positioning signal does not satisfy the preset condition, visual positioning, IMU positioning, or VIO positioning is used during the process, combined with the absolute position of the initial point, to position the lawn mowing robot and control it to walk along the planned path. If the satellite positioning signal satisfies the preset condition during continuing the operation, then satellite positioning is used. In addition, starting from the initial point, if the satellite positioning signal is detected to be unsatisfying again, steps S2 to S5 are performed again.

For example, as shown in FIG. 3F, during a process of the lawn mowing robot performing a lawn mowing operation along a planned path, if a satellite positioning signal does not satisfy a preset condition during moving along the planned path, such as at position A, endurance is maintained through VIO positioning. A remaining sustainment mileage is calculated, and a distance between a current position of the lawn mowing robot and a nearest first position is determined. If the distance to the nearest first position is equal to the remaining sustainment mileage, the lawn mowing robot stops walking, i.e., an initial position at position B. Then, the lawn mowing robot is controlled to rotate in place and capture environment images in different directions through the rear camera; and if a sky region is identified in an environment image, a maximum inscribed circle of the sky region is taken. If a radius of the inscribed circle is greater than a preset radius and a distance from the lawn mowing robot to a center of the inscribed circle (i.e., a second position, such as position C) is less than or equal to the remaining sustainment mileage, the lawn mowing robot is controlled to move toward the center coordinate of the inscribed circle. If the distance between the position of the lawn mowing robot and the center of the inscribed circle (i.e., the second position, such as position C) is greater than the remaining sustainment mileage, the lawn mowing robot moves toward a nearest first position (position D). Herein, position D represents the nearest first position, which is farther from position B than position C is from position B. Thus, an inscribed circle center closer than the recorded nearest position can be found, improving positioning accuracy and enabling the lawn mowing robot to reach an open area. Since the lawn mowing robot is still within the remaining sustainment mileage during moving toward the center coordinate, it can still be accurately positioned to reach position C. Then it returns from position C to position B to calibrate position B and obtain an accurate position of B, and starts walking along the planned path from position B to perform the lawn mowing operation.

By using the method for controlling a mobile device described in this disclosure, the mobile device is controlled to move along a preset path. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if the satellite positioning signal does not satisfy the preset condition, the mobile device is controlled to stop moving and capture a first environment image in at least one direction through a camera to identify a sky region in the first environment image and determine a second position corresponding to the sky region. The remaining sustainment mileage is obtained based on a preset sustainment mileage and a mileage of the mobile device continuing up to move along the preset path. If a distance between the mobile device and the second position is less than or equal to the remaining sustainment mileage, then the mobile device is controlled to move toward the second position, such that a satellite positioning signal is detected to satisfy the preset condition at a position after moving of the mobile device. In this way, accurate positioning can be maintained within a certain distance even when the satellite positioning signal does not satisfy the condition; namely, a position of an open area (i.e., a nearest first position) can be found within the certain distance. When the distance between the mobile device and the nearest first position is equal to the remaining sustainment mileage, it indicates that if the mobile device does not go to the first position, it might result in the distance to a subsequent first position also being greater than the remaining sustainment mileage, rendering the mobile device unable to accurately reach the first position. Therefore, when the distance between the mobile device and the first position is equal to the remaining sustainment mileage and the satellite positioning signal still does not satisfy the condition, the mobile device stops moving and captures images through rotate-in-place to find a second position. If a distance between the mobile device and the second position is less than or equal to the remaining sustainment mileage, the mobile device goes to the second position. Herein, find a second position through rotate-in-place is to determine whether there is an open area closer than the stored nearest first position, and going to a closer open area can make the positioning more accurate when the mobile device returns to the initial point (the position where the mobile device stops moving), i.e., satellite positioning can be used again in the open area, thereby solving the problem of inaccurate satellite positioning due to blockages affecting movement of the lawn mowing robot.

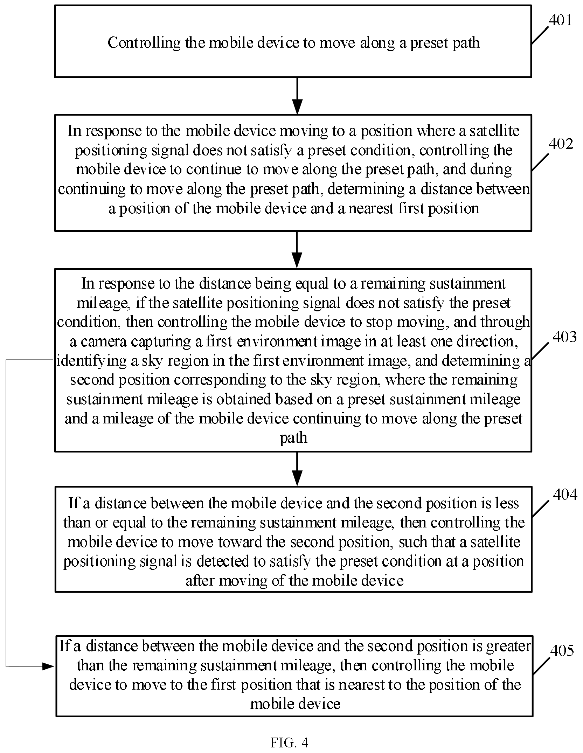

Reference is made to FIG. 4, which is a schematic flowchart of another method for controlling a mobile device according to an embodiment of this disclosure. As shown in the figure, the method for controlling a mobile device includes:

401. Controlling the mobile device to move along a preset path.

402. In response to the mobile device moving to a position where a satellite positioning signal does not satisfy a preset condition, controlling the mobile device to continue to move along the preset path, and during continuing to move along the preset path, determining a distance between a position of the mobile device and a nearest first position.

403. In response to the distance being equal to a remaining sustainment mileage, if the satellite positioning signal does not satisfy the preset condition, then controlling the mobile device to stop moving, and through a camera capturing a first environment image in at least one direction, identifying a sky region in the first environment image, and determining a second position corresponding to the sky region, where the remaining sustainment mileage is obtained based on a preset sustainment mileage and a mileage of the mobile device continuing to move along the preset path.

404. If a distance between the mobile device and the second position is less than or equal to the remaining sustainment mileage, then controlling the mobile device to move toward the second position, such that a satellite positioning signal is detected to satisfy the preset condition at a position after moving of the mobile device.

405. If a distance between the mobile device and the second position is greater than the remaining sustainment mileage, then controlling the mobile device to move to the first position that is nearest to the position of the mobile device.

Specific descriptions for the steps 401 to 405 can be found in related steps of the method for controlling a mobile device described in FIG. 3A, and details are not described herein again.

By using the method for controlling a mobile device described in this disclosure, accuracy of positioning can be maintained within a certain distance even when a satellite positioning signal does not satisfy a condition; namely, a position of an open area (i.e., a nearest first position) can be found within the certain distance. When a distance between the position of the mobile device and the first position is equal to a remaining sustainment mileage, it indicates that if the mobile device does not go to the first position, it might result in the distance to a subsequent first position also being greater than the remaining sustainment mileage, rendering the mobile device unable to accurately reach the first position. Therefore, when the distance between the mobile device and the first position is equal to the remaining sustainment mileage and the satellite positioning signal still does not satisfy the condition, the mobile device stops moving and captures images through rotate-in-place to find a second position. If a distance between the mobile device and the second position is less than or equal to the remaining sustainment mileage, the mobile device goes to the second position. Herein, finding a second position through rotate-in-place is to determine whether there is an open area closer than the stored nearest first position, and going to a closer open area can make the positioning more accurate when the mobile device returns to the initial point (the position where the mobile device stops moving), i.e., satellite positioning can be used again in the open area, thereby solving the problem of inaccurate satellite positioning due to blockages affecting movement of the lawn mowing robot.

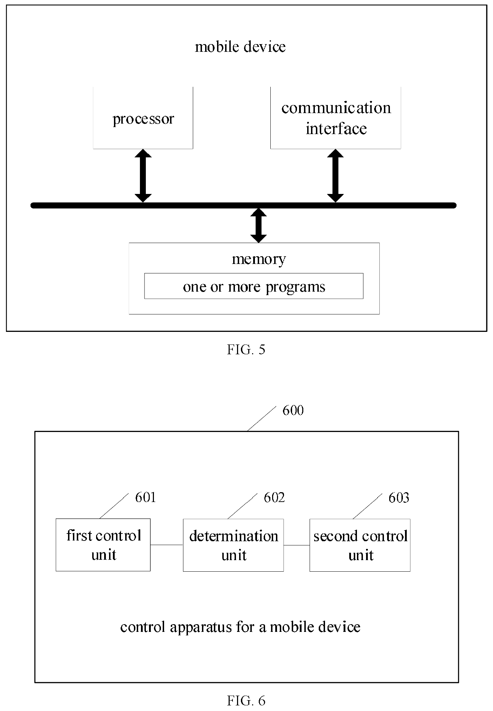

Consistently with the above embodiments, reference is made to FIG. 5, which is a schematic structural diagram of a mobile device according to an embodiment of this disclosure. As shown in the figure, the mobile device includes a processor, a memory, a communication interface, and one or more programs, where the one or more programs are stored in the memory and configured to be executed by the processor. In an embodiment of this disclosure, the programs include instructions for performing the following steps:

controlling the mobile device to move along a preset path;
in response to the mobile device moving to a position where a satellite positioning signal does not satisfy a preset condition, controlling the mobile device to continue to move along the preset path, and during continuing up to move along the preset path, determining a distance between a position of the mobile device and a nearest first position; and

in response to the distance being equal to a remaining sustainment mileage, if detecting that the satellite positioning signal does not satisfy the preset condition, then controlling the mobile device to move toward the nearest first position, such that a satellite positioning signal is detected to satisfy the preset condition at a position after moving of the mobile device, where the remaining sustainment mileage is obtained based on a preset sustainment mileage and a mileage of the mobile device continuing to move along the preset path.

Optionally, the first position is a projection coordinate on the ground of a sky region in an environment image captured by a camera of the mobile device.

Optionally, the first position is a projection coordinate on the ground of a center of a maximum inscribed circle of a sky region in the environment image.

Optionally, the programs further include instructions for performing the following steps: while the mobile device moves along the preset path, capturing at least one the environment image through the camera and storing at least one the first position.

Optionally, in the aspect of capturing at least one environment image through the camera and storing at least one the first position while the mobile device moves along the preset path, the programs include instructions for performing the following step: while the mobile device moves along the preset path, capturing at least one the environment image through the camera, taking a maximum inscribed circle of a sky region in the environment image, and in response to a radius of the maximum inscribed circle being greater than a preset radius, storing a coordinate of a center of the maximum inscribed circle projected on the ground as the first position.

Optionally, the remaining sustainment mileage is equal to a difference obtained by subtracting the mileage of the mobile device continuing to move along the preset path from the preset sustainment mileage.

Optionally, the programs further include instructions for performing the following step: after detecting that the satellite positioning signal satisfies the preset condition at the position after moving of the mobile device, controlling the mobile device to return to an initial point, and during a return process, positioning the mobile device, wherein: in response to the mobile device moving to a position where the satellite positioning signal satisfies the preset condition, a satellite positioning technology is used for positioning; in response to the mobile device moving to a position where the satellite positioning signal does not satisfy the preset condition, a non-satellite positioning technology is used for positioning; and the initial point is a position of the mobile device when the distance is equal to the remaining sustainment mileage.

Optionally, the programs further include instructions for performing the following step: after the mobile device returns to the initial point, performing again the step of controlling the mobile device to move along the preset path.

Optionally, in the aspect of controlling the mobile device to move toward the nearest first position, the programs include instructions for performing the following steps: controlling the mobile device to stop moving, and then controlling the mobile device to move from the initial point toward the nearest first position; or controlling the mobile device to move to the nearest first position first, and then stopping moving; or controlling the mobile device to move into a projection range on the ground of a maximum inscribed circle corresponding to the nearest first position, and in response to the mobile device entering the projection range on the ground of the maximum inscribed circle, reducing a moving speed to a preset moving speed, moving for a first preset distance at the preset moving speed, stopping moving to wait for a satellite positioning signal of the mobile device to satisfy the preset condition, and if the satellite positioning signal of the mobile device satisfies the preset condition within a preset time period, returning to the initial point; and if the satellite positioning signal of the mobile device does not satisfy the preset condition within the preset time period, continuing up to move for a second preset distance and waiting again for the satellite positioning signal of the mobile device to satisfy the preset condition.

Optionally, the programs further include instructions for performing the following step: in response to the distance being greater than or less than the remaining sustainment mileage, controlling the mobile device to continue to move along the preset path.

Optionally, the programs further include instructions for performing the following step: under a condition that the satellite positioning signal does not satisfy the preset condition, positioning the mobile device through a non-satellite positioning technology to control the mobile device to continue to move along the preset path.

Optionally, the mobile device further includes a rear-view camera, and a lens of the rear-view camera being arranged toward an upper rear of the mobile device.

The mobile device described in this disclosure controls the mobile device to move along a preset path. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if detecting that the satellite positioning signal does not satisfy the preset condition, then the mobile device is controlled to move toward the nearest first position, such that a satellite positioning signal is detected to satisfy the preset condition at a position after moving of the mobile device. The remaining sustainment mileage is obtained based on a preset sustainment mileage and a mileage of the mobile device continuing to move along the preset path. Furthermore, accurate positioning can be maintained within a certain distance even when the satellite positioning signal does not satisfy the condition. When the distance from the mobile device to the nearest first position is equal to the remaining sustainment mileage, it indicates that if the mobile device does not go to the first position, it might result in the distance to a subsequent nearest first position also being greater than the remaining sustainment mileage, rendering the mobile device unable to accurately reach the position of the first position. Therefore, when the distance between the mobile device and the nearest first position is equal to the remaining sustainment mileage and the satellite positioning signal still does not satisfy the condition, choosing to move toward the nearest first position can reduce frequency of going to the first position and ensure operation efficiency. Thus, it can also be ensured that the mobile device can accurately reach the position of the first position, and the first position is used to guide the mobile device to reach an open area (an area where the satellite positioning signal satisfies a preset condition) where satellite positioning can be used again, thereby solving the problem of inaccurate satellite positioning due to blockages affecting movement of the lawn mowing robot.

Correspondingly, based on the electronic device shown in FIG. 5, the above program can also include instructions for performing the following steps:

controlling the mobile device to move along a preset path;
in response to the mobile device moving to a position where a satellite positioning signal does not satisfy a preset condition, controlling the mobile device to continue to move along the preset path, and during continuing up to move along the preset path, determining a distance between a position of the mobile device and a nearest first position;
in response to the distance being equal to a remaining sustainment mileage, if the satellite positioning signal does not satisfy the preset condition, then controlling the mobile device to stop moving, and through a camera capturing a first environment image in at least one direction, identifying a sky region in the first environment image, and determining a second position corresponding to the sky region, where the remaining sustainment mileage is obtained based on a preset sustainment mileage and a mileage of the mobile device continuing to move along the preset path; and
if a distance between the mobile device and the second position is less than or equal to the remaining sustainment mileage, then controlling the mobile device to move toward the second position, such that a satellite positioning signal is detected to satisfy the preset condition at a position after moving of the mobile device.

Optionally, the first position is a projection coordinate on the ground of a sky region in a second environment image captured by a camera of the mobile device.

Optionally, the first position is a projection coordinate on the ground of a center of a maximum inscribed circle of a sky region in the second environment image.

Optionally, the programs further include instructions for performing the following steps: while the mobile device moves along the preset path, capturing at least one the second environment image through the camera and storing at least one the first position.

Optionally, in the aspect of capturing at least one the second environment image through the camera and storing at least one the first position while the mobile device moves along the preset path, the programs include instructions for performing the following step: while the mobile device moves along the preset path, capturing at least one the second environment image through the camera, taking a maximum inscribed circle of a sky region in the second environment image, and in response to a radius of the maximum inscribed circle being greater than a first preset radius, storing a coordinate of a center of the maximum inscribed circle projected on the ground as the first position.

Optionally, the second position is a projection coordinate on the ground of a sky region in the first environment image.

Optionally, the second position is a projection coordinate on the ground of a center of a maximum inscribed circle of a sky region in the first environment image.

Optionally, the programs further include instructions for performing the following step: through controlling the mobile device to rotate in place so as to drive the camera to rotate, enabling the camera to capture the first environment image in at least one direction.

Optionally, in the aspect of determining the second position corresponding to the sky region, the programs include instructions for performing the following step: taking a maximum inscribed circle of a sky region in the first environment image, and in response to a radius of the maximum inscribed circle being greater than a second preset radius, obtaining a coordinate of a center of the maximum inscribed circle projected on the ground to obtain the second position.

Optionally, the remaining sustainment mileage is equal to a difference obtained by subtracting the mileage of the mobile device continuing to move along the preset path from the preset sustainment mileage.

Optionally, the programs further include instructions for performing the following step: in response to the distance between the mobile device and the nearest first position being equal to the remaining sustainment mileage, if the satellite positioning signal satisfies the preset condition, then controlling the mobile device to move along the preset path through satellite positioning.

Optionally, the programs further include instructions for performing the following step: if the distance between the mobile device and the second position is greater than the remaining sustainment mileage, then controlling the mobile device to move to the first position that is nearest to the position of the mobile device.

Optionally, the programs further include instructions for performing the following step: after detecting that the satellite positioning signal satisfies the preset condition at the position after moving of the mobile device, controlling the mobile device to return to an initial point, and during a return process, positioning the mobile device, wherein: in response to the mobile device moving to a position where the satellite positioning signal satisfies the preset condition, a satellite positioning technology is used for positioning; in response to the mobile device moving to a position where the satellite positioning signal does not satisfy the preset condition, a non-satellite positioning technology is used for positioning; and the initial point is a position where the mobile device stops moving.

Optionally, the programs further include instructions for performing the following step: in response to the distance between the position of the mobile device and the nearest first position being greater than or less than the remaining sustainment mileage, controlling the mobile device to continue to move along the preset path.

Optionally, the programs further include instructions for performing the following step: under a condition that the satellite positioning signal does not satisfy the preset condition, positioning the mobile device through a non-satellite positioning technology to control the mobile device to continue to move along the preset path.

Optionally, the mobile device further includes a rear-view camera, and a lens of the rear-view camera being arranged toward an upper rear of the mobile device.

The mobile device described in this disclosure controls the mobile device to move along a preset path. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if the satellite positioning signal does not satisfy the preset condition, the mobile device is controlled to stop moving and capture a first environment image in at least one direction through a camera to identify a sky region in the first environment image and determine a second position corresponding to the sky region. The remaining sustainment mileage is obtained based on a preset sustainment mileage and a mileage of the mobile device continuing up to move along the preset path. If a distance between the mobile device and the second position is less than or equal to the remaining sustainment mileage, then the mobile device is controlled to move toward the second position, such that a satellite positioning signal is detected to satisfy the preset condition at a position after moving of the mobile device. In this way, accurate positioning can be maintained within a certain distance even when the satellite positioning signal does not satisfy the condition; namely, a position of an open area (i.e., a nearest first position) can be found within the certain distance. When the distance between the mobile device and the nearest first position is equal to the remaining sustainment mileage, it indicates that if the mobile device does not go to the first position, it might result in the distance to a subsequent first position also being greater than the remaining sustainment mileage, rendering the mobile device unable to accurately reach the first position. Therefore, when the distance between the mobile device and the first position is equal to the remaining sustainment mileage and the satellite positioning signal still does not satisfy the condition, the mobile device stops moving and captures images through rotate-in-place to find a second position. If a distance between the mobile device and the second position is less than or equal to the remaining sustainment mileage, the mobile device goes to the second position. Herein, find a second position through rotate-in-place is to determine whether there is an open area closer than the stored nearest first position, and going to a closer open area can make the positioning more accurate when the mobile device returns to the initial point (the position where the mobile device stops moving), i.e., satellite positioning can be used again in the open area, thereby solving the problem of inaccurate satellite positioning due to blockages affecting movement of the lawn mowing robot.

FIG. 6 is a functional unit block diagram of an apparatus 600 for controlling a mobile device according to an embodiment of this disclosure. The apparatus 600 includes a first control unit 601, a determination unit 602 and a second control unit 603, wherein:

the first control unit 601 is configured to control the mobile device to move along a preset path;
the determination unit 602 is configured to: in response to the mobile device moving to a position where a satellite positioning signal does not satisfy a preset condition, control the mobile device to continue to move along the preset path, and during continuing up to move along the preset path, determine a distance between a position of the mobile device and a nearest first position; and
the second control unit 603 is configured to: in response to the distance being equal to a remaining sustainment mileage, if detecting that the satellite positioning signal does not satisfy the preset condition, then control the mobile device to move toward the nearest first position, such that a satellite positioning signal is detected to satisfy the preset condition at a position after moving of the mobile device, where the remaining sustainment mileage is obtained based on a preset sustainment mileage and a mileage of the mobile device continuing to move along the preset path.

Optionally, the first position is a projection coordinate on the ground of a sky region in an environment image captured by a camera of the mobile device.

Optionally, the first position is a projection coordinate on the ground of a center of a maximum inscribed circle of a sky region in the environment image.

Optionally, the apparatus 600 is further specifically configured to: while the mobile device moves along the preset path, capture at least one the environment image through the camera and store at least one the first position.

Optionally, in the aspect of capturing at least one environment image through the camera and storing at least one the first position while the mobile device moves along the preset path, the apparatus 600 is specifically configured to: while the mobile device moves along the preset path, capture at least one the environment image through the camera, take a maximum inscribed circle of a sky region in the environment image, and in response to a radius of the maximum inscribed circle being greater than a preset radius, store a coordinate of a center of the maximum inscribed circle projected on the ground as the first position.

Optionally, the remaining sustainment mileage is equal to a difference obtained by subtracting the mileage of the mobile device continuing to move along the preset path from the preset sustainment mileage.

Optionally, the apparatus 600 is further specifically configured to:

After detecting that the satellite positioning signal satisfies the preset condition at the position after moving of the mobile device, controlling the mobile device to return to the initial point, and during a return process, positioning the mobile device, wherein: in response to the mobile device moving to a position where the satellite positioning signal satisfies the preset condition, a satellite positioning technology is used for positioning; in response to the mobile device moving to a position where the satellite positioning signal does not satisfy the preset condition, a non-satellite positioning technology is used for positioning; and the initial point is a position of the mobile device when the distance is equal to the remaining sustainment mileage.

Optionally, the apparatus 600 for controlling a mobile device is further specifically configured to: after the mobile device returns to the initial point, perform again the step of controlling the mobile device to move along a preset path.

Optionally, in the aspect of controlling the mobile device to move toward the nearest first position, the second control unit 603 is specifically configured to: control the mobile device to stop moving, and then control the mobile device to move from the initial point toward the nearest first position; or control the mobile device to move to the nearest first position first, and then stop moving; or control the mobile device to move into a projection range on the ground of a maximum inscribed circle corresponding to the nearest first position, and in response to the mobile device entering the projection range on the ground of the maximum inscribed circle, reducing a moving speed to a preset moving speed, moving for a first preset distance at the preset moving speed, stopping moving to wait for a satellite positioning signal of the mobile device to satisfy the preset condition, and if the satellite positioning signal of the mobile device satisfies the preset condition within a preset time period, returning to the initial point; and if the satellite positioning signal of the mobile device does not satisfy the preset condition within the preset time period, continuing up to move for a second preset distance and waiting again for the satellite positioning signal of the mobile device to satisfy the preset condition.

Optionally, the apparatus 600 for controlling a mobile device is further specifically configured to: in response to the distance being greater than or less than the remaining sustainment mileage, control the mobile device to continue to move along the preset path.

Optionally, the apparatus 600 for controlling a mobile device is further specifically configured to: under a condition that the satellite positioning signal does not satisfy the preset condition, position the mobile device through a non-satellite positioning technology to control the mobile device to continue to move along the preset path.

The apparatus for controlling a mobile device described in this disclosure controls the mobile device to move along a preset path. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if detecting that the satellite positioning signal does not satisfy the preset condition, then the mobile device is controlled to move toward the nearest first position, such that a satellite positioning signal is detected to satisfy the preset condition at a position after moving of the mobile device. The remaining sustainment mileage is obtained based on a preset sustainment mileage and a mileage of the mobile device continuing up to move along the preset path. Furthermore, accurate positioning can be maintained within a certain distance even when the satellite positioning signal does not satisfy the condition. When the distance from the mobile device to the nearest first position is equal to the remaining sustainment mileage, it indicates that if the mobile device does not go to the first position, it might result in the distance to a subsequent nearest first position also being greater than the remaining sustainment mileage, rendering the mobile device unable to accurately reach the position of the first position. Therefore, when the distance between the mobile device and the nearest first position is equal to the remaining sustainment mileage and the satellite positioning signal still does not satisfy the condition, choosing to move toward the nearest first position can reduce frequency of going to the first position and ensure operation efficiency. Thus, it can also be ensured that the mobile device can accurately reach the position of the first position, and the first position is used to guide the mobile device to reach an open area (an area where the satellite positioning signal satisfies a preset condition) where satellite positioning can be used again, thereby solving the problem of inaccurate satellite positioning due to blockages affecting movement of the lawn mowing robot.

Correspondingly, based on the apparatus 600 for controlling a mobile device shown in FIG. 6, the following functions can also be realized:

the first control unit 601 is configured to: control the mobile device to move along a preset path; and in response to the mobile device moving to a position where a satellite positioning signal does not satisfy a preset condition, control the mobile device to continue up to move along the preset path, and during continuing up to move along the preset path, determine a distance between a position of the mobile device and a nearest first position;

the determination unit 602 is configured to: in response to the distance being equal to a remaining sustainment mileage, if the satellite positioning signal does not satisfy the preset condition, then control the mobile device to stop moving, and through a camera capture a first environment image in at least one direction, identify a sky region in the first environment image, and determine a second position corresponding to the sky region, where the remaining sustainment mileage is obtained based on a preset sustainment mileage and a mileage of the mobile device continuing to move along the preset path; and

the second control unit 603 is configured to: if a distance between the mobile device and the second position is less than or equal to the remaining sustainment mileage, then control the mobile device to move toward the second position, such that a satellite positioning signal is detected to satisfy the preset condition at a position after moving of the mobile device.

Optionally, the first position is a projection coordinate on the ground of a sky region in a second environment image captured by a camera of the mobile device.

Optionally, the first position is a projection coordinate on the ground of a center of a maximum inscribed circle of a sky region in the second environment image.

Optionally, the apparatus 600 for controlling a mobile device is further specifically configured to: while the mobile device moves along the preset path, capture at least one the second environment image through the camera and store at least one the first position.

Optionally, in the aspect of capturing at least one the second environment image through the camera and storing at least one the first position while the mobile device moves along the preset path, the apparatus 600 for controlling a mobile device is specifically configured to: while the mobile device moves along the preset path, capture at least one the second environment image through the camera, take a maximum inscribed circle of a sky region in the second environment image, and in response to a radius of the maximum inscribed circle being greater than a first preset radius, store a coordinate of a center of the maximum inscribed circle projected on the ground as the first position.

Optionally, the second position is a projection coordinate on the ground of a sky region in the first environment image.

Optionally, the second position is a projection coordinate on the ground of a center of a maximum inscribed circle of a sky region in the first environment image.

Optionally, the apparatus 600 for controlling a mobile device is further specifically configured to: through controlling the mobile device to rotate in place so as to drive the camera to rotate, enable the camera to capture the first environment image in at least one direction.

Optionally, in the aspect of determining the second position corresponding to the sky region, the apparatus 600 for controlling a mobile device is specifically configured to: take a maximum inscribed circle of a sky region in the first environment image, and in response to a radius of the maximum inscribed circle being greater than a second preset radius, obtain a coordinate of a center of the maximum inscribed circle projected on the ground to obtain the second position.

Optionally, the remaining sustainment mileage is equal to a difference obtained by subtracting the mileage of the mobile device continuing up to move along the preset path from the preset sustainment mileage.

Optionally, the apparatus 600 for controlling a mobile device is further specifically configured to: in response to the distance between the mobile device and the nearest first position being equal to the remaining sustainment mileage, if the satellite positioning signal satisfies the preset condition, then control the mobile device to move along the preset path through satellite positioning.

Optionally, the apparatus 600 for controlling a mobile device is further specifically configured to: if the distance between the mobile device and the second position is greater than the remaining sustainment mileage, then control the mobile device to move to the first position that is nearest to the position of the mobile device.

Optionally, the apparatus 600 for controlling a mobile device is further specifically configured to: after detecting that the satellite positioning signal satisfies the preset condition at the position after moving of the mobile device, control the mobile device to return to an initial point, and during a return process, position the mobile device, wherein: in response to the mobile device moving to a position where the satellite positioning signal satisfies the preset condition, a satellite positioning technology is used for positioning; in response to the mobile device moving to a position where the satellite positioning signal does not satisfy the preset condition, a non-satellite positioning technology is used for positioning; and the initial point is a position where the mobile device stops moving.

Optionally, the apparatus 600 for controlling a mobile device is further specifically configured to: in response to the distance between the position of the mobile device and the nearest first position being greater than or less than the remaining sustainment mileage, control the mobile device to continue up to move along the preset path.

Optionally, the apparatus 600 for controlling a mobile device is further specifically configured to: under a condition that the satellite positioning signal does not satisfy the preset condition, position the mobile device through a non-satellite positioning technology to control the mobile device to continue to move along the preset path.

The apparatus for controlling a mobile device described in this disclosure controls the mobile device to move along a preset path. When the mobile device moves to a position where a satellite positioning signal does not satisfy a preset condition, the mobile device is controlled to continue to move along the preset path, and during continuing up to move along the preset path, a distance between the position of the mobile device and a nearest first position is determined. In response to the distance being equal to a remaining sustainment mileage, if the satellite positioning signal does not satisfy the preset condition, the mobile device is controlled to stop moving and capture a first environment image in at least one direction through a camera to identify a sky region in the first environment image and determine a second position corresponding to the sky region. The remaining sustainment mileage is obtained based on a preset sustainment mileage and a mileage of the mobile device continuing up to move along the preset path. If a distance between the mobile device and the second position is less than or equal to the remaining sustainment mileage, then the mobile device is controlled to move toward the second position, such that a satellite positioning signal is detected to satisfy the preset condition at a position after moving of the mobile device. In this way, accurate positioning can be maintained within a certain distance even when the satellite positioning signal does not satisfy the condition; namely, a position of an open area (i.e., a nearest first position) can be found within the certain distance. When the distance between the mobile device and the nearest first position is equal to the remaining sustainment mileage, it indicates that if the mobile device does not go to the first position, it might result in the distance to a subsequent first position also being greater than the remaining sustainment mileage, rendering the mobile device unable to accurately reach the first position. Therefore, when the distance between the mobile device and the first position is equal to the remaining sustainment mileage and the satellite positioning signal still does not satisfy the condition, the mobile device stops moving and captures images through rotate-in-place to find a second position. If a distance between the mobile device and the second position is less than or equal to the remaining sustainment mileage, the mobile device goes to the second position. Herein, find a second position through rotate-in-place is to determine whether there is an open area closer than the stored nearest first position, and going to a closer open area can make the positioning more accurate when the mobile device returns to the initial point (the position where the mobile device stops moving), i.e., satellite positioning can be used again in the open area, thereby solving the problem of inaccurate satellite positioning due to blockages affecting movement of the lawn mowing robot.

It can be understood that functions of various program modules of the apparatus for controlling a mobile device in this embodiment can be specifically implemented according to methods in the above method embodiments, and the specific implementation process can refer to relevant descriptions of the above method embodiments, and details are not described herein again.

An embodiment of this disclosure further provides a computer storage medium, wherein the computer storage medium stores a computer program for electronic data exchange, the computer program causing a computer to perform part or all of steps described in any of the above method embodiments, and the computer includes a mobile device.

An embodiment of this disclosure further provides a computer program product, where the computer program product includes a non-transitory computer-readable storage medium storing a computer program, and the computer program is operable to cause a computer to perform part or all of steps described in any of the above method embodiments. The computer program product can be a software installation package. The computer includes a mobile device.

It should be noted that for simple description, the above method embodiments are all expressed as combinations of a series of actions. However, those skilled in the art should know that this disclosure is not limited to the described order of actions because some steps can be performed in other orders or simultaneously according to this disclosure. Secondly, those skilled in the art should also know that the embodiments described in the specification are all preferred embodiments, and the actions and modules involved are not necessarily required for this disclosure.

In the above embodiments, descriptions of various embodiments have different emphases. For parts not detailed in one embodiment, reference can be made to relevant descriptions in other embodiments.

In several embodiments provided in this disclosure, it should be understood that the disclosed system can be realized in other ways. For example, the system embodiments described above are only schematic. For example, the division of units is only a logical function division, and there may be other division methods in actual implementation. For example, multiple units or components can be combined or integrated into another system, or some features can be ignored or not performed.

On the other hand, the displayed or discussed mutual coupling or direct coupling or communication connection can be indirect coupling or communication connection through some interfaces, systems, or units, and can be in electrical or other forms.

The units described as separate components may or may not be physically separate, and components displayed as units may or may not be physical units, i.e., they may be located in one place or distributed over multiple network units. Part or all of the units can be selected according to actual needs to achieve objectives of solutions of the embodiments.

In addition, each functional unit in each embodiment of this disclosure can be integrated into one processing unit, or each unit can exist separately and physically, or two or more units can be integrated into one unit. The integrated units can be realized in a form of hardware or in a form of software functional units.

If the integrated units are realized in the form of software functional units and sold or used as independent products, they can be stored in a computer-readable memory. Based on such understanding, the technical solutions of this disclosure essentially, or the part that contributes to the prior art, or all or part of the technical solutions can be embodied in a form of a software product. The computer software product is stored in a memory and includes several instructions for causing a computer device (which can be a personal computer, a server, or a network device, etc.) to perform all or part of the steps of the methods in each embodiment of this disclosure. The aforementioned memory includes: a USB flash drive, a Read-Only Memory (ROM), a Random Access Memory (RAM), a mobile hard disk, a magnetic disk or an optical disk, and other media that can store program codes.

Those of ordinary skill in the art can understand that all or part of the steps in various methods of the above embodiments can be completed by instructing relevant hardware through a program. The program can be stored in a computer-readable memory, and the memory can include: a flash drive, a Read-Only Memory (ROM), a Random Access Memory (RAM), a magnetic disk or an optical disk.

The embodiments of this disclosure have been described in detail above. Specific examples are used herein to explain principles and implementation modes of this disclosure. The descriptions of the above embodiments are only used to help understand the methods and core ideas of this disclosure. Meanwhile, for those of ordinary skill in the art, there will be changes in specific implementation modes and application scopes according to ideas of this disclosure. In summary, the contents of the specification should not be understood as limitations to this disclosure.

**Claims**

1. A control method for a mobile device, comprising:

   controlling the mobile device to move along a preset path;
   in response to the mobile device moving to a position where a satellite positioning signal does not satisfy a preset condition, controlling the mobile device to continue to move along the preset path and determining a distance between a position of the mobile device and a nearest first position during the continued movement along the preset path; and
   in response to the distance being equal to or less than a remaining sustainment mileage and detecting that the satellite positioning signal does not satisfy the preset condition, controlling the mobile device to change a movement mode such that, at a position after movement the mobile device detects a satellite positioning signal satisfying the preset condition;
   wherein the remaining sustainment mileage is obtained based on a preset sustainment mileage and a mileage traveled by the mobile device during continued movement along the preset path.

2. The method according to claim 1, wherein controlling the mobile device to change the movement mode comprises:
   controlling the mobile device to move toward the nearest first position.

3. The method according to claim 2, wherein a first position is a projection coordinate on the ground of a sky region in an environment image captured by a camera of the mobile device.

4. The method according to claim 3, wherein the first position is the projection coordinate on the ground of a center of a maximum inscribed circle of the sky region in the environment image.

5. The method according to claim 3 or 4, further comprising:
capturing at least one environment image by the camera and storing at least one first position during movement of the mobile device along the preset path.

6. The method according to claim 5, wherein the capturing the at least one environment image through the camera and storing the at least one first position during movement of the mobile device along the preset path comprises:
capturing the at least one environment image by the camera during a process of the mobile device moving along the preset path, and obtaining a maximum inscribed circle of a sky region in the environment image; and storing coordinate of a center of the maximum inscribed circle projected on the ground as a first position when a radius of the maximum inscribed circle is greater than a preset radius.

7. The method according to any one of claims 2 to 6, wherein the remaining sustainment mileage is equal to a difference obtained by subtracting the mileage of the mobile device traveled by the mobile device during continued movement along the preset path from the preset sustainment mileage.

8. The method according to any one of claims 2 to 7, further comprising:

in response to detecting , at a position reached after the continued movement of the mobile device, that a satellite positioning signal satisfies the preset condition , controlling the mobile device to return to an initial point, and positioning the mobile device during a process of returning; wherein, when the mobile device moves to a position where the satellite positioning signal satisfies the preset condition, the positioning is performed using a satellite positioning technology, and when the mobile device moves to a position where the satellite positioning signal does not satisfy the preset condition, the positioning is performed using a non-satellite positioning technology, the initial point being a position of the mobile device when the distance is equal to the remaining sustainment distance.

9. The method according to claim 8, further comprising:
performing the step of controlling the mobile device to move along the preset path again in response to the mobile device returning to the initial point.

10. The method according to claim 8 or 9, wherein controlling the mobile device to move toward the nearest first position comprises:

controlling the mobile device to stop moving, and controlling the mobile device to move from the initial point toward the nearest first position; or
controlling the mobile device to first move toward the nearest first position, and stopping moving; or
controlling the mobile device to move into a projection range on the ground of a maximum inscribed circle corresponding to the nearest first position; reducing a movement speed to a preset movement speed and moving for a first preset distance at the preset movement speed, in response to the mobile device entering the projection range on the ground of the maximum inscribed circle; stopping movement to wait for the satellite positioning signal of the mobile device to satisfy the preset condition; returning to the initial point when the satellite positioning signal of the mobile device satisfies the preset condition within a preset time period; and continuing to move for a second preset distance and waiting again for the satellite positioning signal of the mobile device to satisfy the preset condition, when the satellite positioning signal of the mobile device does not satisfy the preset condition within the preset time period.

11. The method according to any one of claims 2 to 10, further comprising:
controlling the mobile device to continue to move along the preset path, in response to the distance being greater than or less than the remaining sustainment mileage.

12. The method according to any one of claims 2 to 11, further comprising:
positioning the mobile device using a non-satellite positioning technology to control the mobile device to continue to move along the preset path, in response to the satellite positioning signal does not satisfy the preset condition.

13. The method according to claim 1, wherein controlling the mobile device to change the movement mode comprises:

controlling the mobile device to stop moving and acquiring a first environment image in at least one direction by a camera;
identifying a sky region in the first environment image and determining a second position corresponding to the sky region; and controlling the mobile device to move toward the second position when a distance between the mobile device and the second position is less than or equal to the remaining sustainment mileage.

14. The method according to claim 13, wherein the first position is a projection coordinate on the ground of a sky region in a second environment image captured by the camera of the mobile device.

15. The method according to claim 14, wherein the first position is a projection coordinate on the ground of a center of a maximum inscribed circle of the sky region in the second environment image.

16. The method according to claim 14 or 15, further comprising:
acquiring at least one the second environment image through the camera, and storing at least one the first position during movement of the mobile device along the preset path.

17. The method according to claim 16, wherein acquiring the at least one the second environment image through the camera, and storing at least one first position during movement of the mobile device along the preset path comprises:
acquiring at least one second environment image through the camera during a process of the mobile device moving along the preset path, and obtaining a maximum inscribed circle of a sky region in the second environment image, and storing a coordinate of a center of the maximum inscribed circle projected on the ground as a first position when a radius of the maximum inscribed circle is greater than a preset radius.

18. The method according to any one of claims 13-17, wherein the second position is a projection coordinate on the ground of a sky region in a first environment image.

19. The method according to claim 18, wherein the second position is a projection coordinate on the ground of a center of a maximum inscribed circle of the sky region in the first environment image.

20. The method according to claim 13, further comprising:
controlling the mobile device to rotate in place to drive the camera to rotate, so as to enable the camera to acquire the at least one first environment image in the at least one direction.

21. The method according to claim 13, wherein the determining the second position corresponding to the sky region comprises:
obtaining a maximum inscribed circle of the sky region in the first environment image; and obtaining a coordinate of a center of the maximum inscribed circle projected on the ground as the second position, when a radius of the maximum inscribed circle being greater than a second preset radius.

22. The method according to any one of claims 13 to 21, wherein the remaining sustainment mileage is equal to a difference obtained by subtracting the mileage of the mobile device continuing to move along the preset path from the preset sustainment mileage.

23. The method according to any one of claims 13 to 22, further comprising:
controlling the mobile device to move along the preset path through satellite positioning technology, when the distance between the mobile device and the nearest first position is equal to the remaining sustainment mileage and the satellite positioning signal satisfies the preset condition.

24. The method according to any one of claims 13 to 23, further comprising:
controlling the mobile device to move to a first position nearest to a position of the mobile device, when the distance between the mobile device and the second position is greater than the remaining sustainment mileage.

25. The method according to any one of claims 13 to 24, further comprising:

controlling the mobile device to return to an initial point after detecting that a satellite positioning signal satisfies the preset condition at the position after movement, and positioning the mobile device during a process of returning;
wherein the mobile device is positioned using a satellite positioning technology when the mobile device moves to a position where the satellite positioning signal satisfies the preset condition, and the mobile device is positioned using a non-satellite positioning technology when the mobile device moves to a position where the satellite positioning signal does not satisfy the preset condition, the initial point being a position where the mobile device stops moving.

26. The method according to any one of claims 13 to 25, further comprising:
controlling the mobile device to continue to move along the preset path, when a distance between a position of the mobile device and the nearest first position is greater than or less than the remaining sustainment mileage.

27. The method according to any one of claims 13 to 26, further comprising:
positioning the mobile device using a non-satellite positioning technology to control the mobile device to continue to move along the preset path, in a case where the satellite positioning signal does not satisfy the preset condition.

28. A mobile device, comprising: a processor and a memory, wherein the memory is configured to store one or more programs, the one or more programs being configured to be executed by the processor and comprising instructions for performing the steps of the method according to any one of claims 1-27.

29. The mobile device according to claim 28, further comprising a rear-view camera, and a lens of the rear-view camera being arranged toward an upper rear of the mobile device.

30. A computer-readable storage medium, wherein the computer-readable storage medium stores a computer program for electronic data exchange, the computer program causing a computer to perform the method according to any one of claims 1-27.

Controlling the mobile device to move along a preset path

101

Controlling the mobile device to continue to move along the preset path, and determining, during the continued movement along the preset path a distance between a position of the mobile device and a nearest first position, in response to the mobile device moving to a position where a satellite positioning signal does not satisfy a preset condition

102

Controlling the mobile device to change a movement mode such that the mobile device detects a satellite positioning signal satisfying the preset condition at a position after movement, in response to the distance being equal to a remaining sustainment mileage and detecting that the satellite positioning signal does not satisfy the preset condition;wherein the remaining sustainment mileage is obtained based on a preset sustainment mileage and a mileage of the mobile device continuing to move along the preset path

103

FIG. 1A

sky region

sky region

environment image

sky region

FIG. 1B

FIG. 1C

FIG. 1D

FIG. 1E

C

B

A

planned
path

FIG. 1F

Controlling the mobile device to move along a preset path

201

During a process of the mobile device moving along the preset path, capturing at least one environment image through a camera, taking a maximum inscribed circle of a sky region in the environment image, and in response to a radius of the maximum inscribed circle being greater than a preset radius, storing a coordinate of a center of the maximum inscribed circle projected on the ground as a first position

202

In response to the mobile device moving to a position where a satellite positioning signal does not satisfy a preset condition, controlling the mobile device to continue to move along the preset path, and during continuing to move along the preset path, determining a distance between a position of the mobile device and a nearest first position

203

In response to the distance being equal to a remaining sustainment mileage, if detecting that the satellite positioning signal does not satisfy the preset condition, then controlling the mobile device to move toward the nearest first position, such that a satellite positioning signal is detected to satisfy the preset condition at a position after moving of the mobile device, where the remaining sustainment mileage is obtained based on a preset sustainment mileage and a mileage of the mobile device continuing to move along the preset path

204

FIG. 2

Controlling the mobile device to move along a preset path  /301

Control the mobile device to continue to move along the preset path, and determine a distance between a position of the mobile device and a nearest first position during the continued movement along the preset path, in response to the mobile device moving to a position where a satellite positioning signal does not satisfy a preset condition  /302

Control the mobile device to stop moving, capture a first environment image in at least one direction through a camera, identify a sky region in the first environment image, and determine a second position corresponding to the sky region, in response to the distance being equal to a remaining sustainment mileage and the satellite positioning signal not satisfying the preset condition, wherein the remaining sustainment mileage is obtained based on a preset sustainment mileage and a mileage of the mobile device continuing to move along the preset path  /303

Control the mobile device to move toward the second position such that the satellite positioning signal is detected to satisfy the preset condition at a position after movement, if a distance between the mobile device and the second position is less than or equal to the remaining sustainment mileage  /304

FIG. 3A

sky region

sky region

environment
image

sky region

FIG. 3B

maximum inscribed circle

environme
nt image

sky region

FIG. 3C

inscribed circle

center

O

rear-view camera

mobile device

ground

O'

first position

FIG. 3D

environment image

offset

center

T

center

rear-view camera

mobile device

ground

T'

O'

FIG. 3E

C

A

B

planned path

FIG. 3F

Controlling the mobile device to move along a preset path /401

In response to the mobile device moving to a position where a satellite positioning signal does not satisfy a preset condition, controlling the mobile device to continue to move along the preset path, and during continuing to move along the preset path, determining a distance between a position of the mobile device and a nearest first position /402

In response to the distance being equal to a remaining sustainment mileage, if the satellite positioning signal does not satisfy the preset condition, then controlling the mobile device to stop moving, and through a camera capturing a first environment image in at least one direction, identifying a sky region in the first environment image, and determining a second position corresponding to the sky region, where the remaining sustainment mileage is obtained based on a preset sustainment mileage and a mileage of the mobile device continuing to move along the preset path /403

If a distance between the mobile device and the second position is less than or equal to the remaining sustainment mileage, then controlling the mobile device to move toward the second position, such that a satellite positioning signal is detected to satisfy the preset condition at a position after moving of the mobile device /404

If a distance between the mobile device and the second position is greater than the remaining sustainment mileage, then controlling the mobile device to move to the first position that is nearest to the position of the mobile device /405

FIG. 4

mobile device

processor

communication interface

memory

one or more programs

FIG. 5

600

601

602

603

first control unit

determination unit

second control unit

control apparatus for a mobile device

FIG. 6

## INTERNATIONAL SEARCH REPORT

| International application No. |
| --- |
| **PCT/CN2025/101201** |

**A. CLASSIFICATION OF SUBJECT MATTER**

G05D 1/43(2024.01)i

According to International Patent Classification (IPC) or to both national classification and IPC

**B. FIELDS SEARCHED**

Minimum documentation searched (classification system followed by classification symbols)

IPC:G05D 1/-

Documentation searched other than minimum documentation to the extent that such documents are included in the fields searched

Electronic data base consulted during the international search (name of data base and, where practicable, search terms used)

CNTXT, ENTXT, ENTXTC, WPABS, WPABSC: 不稳定, 差, 地面, 环境, 露天, 弱, 摄像头, 天空, 投影, 图片, 图像, 未, 未被遮挡, 未遮挡, 位移, 位置, 卫星, 无, 无遮挡, 相机, 信号, 移动, 遮挡, 遮挡物, 坐标, camera, distance, equipment, image, mileag+, move, nearest, path, preset, satellite, signal, sky, sustainable

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118625810 A (SHENZHEN KUMA TECHNOLOGY CO., LTD.) 10 September 2024 (2024-09-10) claims 1-17, description, paragraphs [0034]-[0196], and figures 1-4 | 1-30 |
| PX | CN 118605535 A (SHENZHEN KUMA TECHNOLOGY CO., LTD.) 06 September 2024 (2024-09-06) claims 1-14, description, paragraphs [0034]-[0180], and figures 1-4 | 1-12, 28-30 |
| Y | CN 110015147 A (ZHENGZHOU YUTONG BUS CO., LTD.) 16 July 2019 (2019-07-16) description, paragraphs [0022]-[0027], and figures 1-3 | 1-30 |
| Y | CN 107291077 A (POSITEC POWER TOOLS (SUZHOU) CO., LTD.) 24 October 2017 (2017-10-24) description, paragraphs [0107]-[0194], and figures 1-11 | 1-30 |
| Y | CN 101160535 A (TRIMBLE NAVIGATION, LTD.) 09 April 2008 (2008-04-09) description, page 4, and figures 2-3 | 3-6, 10, 13-27 |
| A | CN 114600002 A (QUALCOMM INC.) 07 June 2022 (2022-06-07) entire document | 1-30 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 September 2025** | **17 September 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2025/101201** |

### C. DOCUMENTS CONSIDERED TO BE RELEVANT

| Category* | Citation of document, with indication, where appropriate, of the relevant passages | Relevant to claim No. |
| --- | --- | --- |
| A | US 2024063928 A1 (QUALCOMM INC.) 22 February 2024 (2024-02-22)<br>entire document | 1-30 |

Form PCT/ISA/210 (second sheet) (July 2022)

## INTERNATIONAL SEARCH REPORT
### Information on patent family members

International application No.

**PCT/CN2025/101201**

| Patent document cited in search report | | | Publication date (day/month/year) | Patent family member(s) | | | Publication date (day/month/year) |
|---|---|---|---|---|---|---|---|
| CN | 118625810 | A | 10 September 2024 | None | | | |
| CN | 118605535 | A | 06 September 2024 | None | | | |
| CN | 110015147 | A | 16 July 2019 | None | | | |
| CN | 107291077 | A | 24 October 2017 | US | 2023004172 | A1 | 05 January 2023 |
| | | | | US | 11841710 | B2 | 12 December 2023 |
| | | | | EP | 4339729 | A2 | 20 March 2024 |
| | | | | US | 2019041869 | A1 | 07 February 2019 |
| | | | | US | 11442466 | B2 | 13 September 2022 |
| | | | | EP | 3444565 | A1 | 20 February 2019 |
| | | | | EP | 3444565 | B1 | 26 January 2022 |
| | | | | US | 2024077885 | A1 | 07 March 2024 |
| | | | | WO | 2017177929 | A1 | 19 October 2017 |
| | | | | DE | 17781905 | T1 | 19 June 2019 |
| | | | | EP | 3998452 | A1 | 18 May 2022 |
| | | | | EP | 3998452 | B1 | 27 December 2023 |
| CN | 101160535 | A | 09 April 2008 | WO | 2006113689 | A2 | 26 October 2006 |
| | | | | US | 2008166011 | A1 | 10 July 2008 |
| | | | | US | 7541975 | B2 | 02 June 2009 |
| | | | | DE | 112006000941 | T5 | 06 March 2008 |
| | | | | DE | 112006000941 | B4 | 07 October 2021 |
| CN | 114600002 | A | 07 June 2022 | US | 2021124057 | A1 | 29 April 2021 |
| | | | | US | 11619745 | B2 | 04 April 2023 |
| | | | | WO | 2021087514 | A1 | 06 May 2021 |
| US | 2024063928 | A1 | 22 February 2024 | WO | 2024039934 | A1 | 22 February 2024 |
| | | | | EP | 4573382 | A1 | 25 June 2025 |

Form PCT/ISA/210 (patent family annex) (July 2022)

**EP 4 772 953 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410802103
- CN 202410801985